(19) Europäisches Patentamt
European Patent Office
Office européen des brevets

(11) **EP 4 181 607 A1**

(12) **EUROPEAN PATENT APPLICATION**

(43) Date of publication:
**17.05.2023 Bulletin 2023/20**

(21) Application number: **22205965.1**

(22) Date of filing: **08.11.2022**

(51) International Patent Classification (IPC):
**H04W 72/0453** (2023.01)   **H04L 5/00** (2006.01)
**H04L 5/14** (2006.01)

(52) Cooperative Patent Classification (CPC):
**H04W 72/0453; H04L 5/0094; H04L 5/1461;**
H04L 5/0053; H04W 72/23

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2021  US 202163278080 P**
**10.11.2021  US 202163278066 P**

(71) Applicant: **ASUSTek Computer Inc.
Peitou, Taipei-City 112 (TW)**

(72) Inventor: **LIN, Ko-Chiang
112 Taipei City (TW)**

(74) Representative: **Hoefer & Partner Patentanwälte
mbB
Pilgersheimer Straße 20
81543 München (DE)**

(54) **METHOD AND APPARATUS FOR SLOT FORMAT INDICATION IN A WIRELESS COMMUNICATION SYSTEM**

(57)    Methods, systems, and apparatuses are provided for slot format indication in a wireless communication system, providing improved efficiency of slot format and collision handling for duplexing enhancement. A User Equipment, UE, can receive indication of one or more first frequency resources from a base station, wherein the one or more first frequency resources are associated with a first transmission direction (1022), and receive indication of, or deriving, one or more second frequency resources, wherein the one or more second frequency resources are associated with a second transmission direction (1024).

1020

Receiving indication of a first frequency resource(s) from a base station, wherein the first frequency resource(s) is associated with a first transmission direction

1022

Receiving indication of or deriving a second frequency resource(s), wherein the second frequency resource(s) is associated with the second transmission direction

1024

**FIG. 7**

EP 4 181 607 A1

**Description**

This disclosure generally relates to wireless communication networks and, more particularly, to a method and apparatus for slot format indication in a wireless communication system.

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the above-noted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

SUMMARY

Methods, systems, and apparatuses are provided for slot format indication in a wireless communication system, providing improved efficiency of slot format and collision handling for duplexing enhancement. Methods according to the invention are defined in the independent claims. The dependent claims define preferred embodiments thereof.

In various embodiments, with this and other concepts, systems, and methods of the present invention, a method for a User Equipment (UE) in a wireless communication system comprises receiving indication of one or more first frequency resources from a base station, wherein the one or more first frequency resources are associated with a first transmission direction, and receiving indication of, or deriving, one or more second frequency resources, wherein the one or more second frequency resources are associated with a second transmission direction.

In various embodiments, with this and other concepts, systems, and methods of the present invention, a method for a base station in a wireless communication system comprises transmitting indication of one or more first frequency resources to a UE, wherein the one or more first frequency resources are associated with Uplink (UL) on a symbol, scheduling an UL transmission on the symbol to the UE if a frequency resource of a UL transmission is within the one or more first frequency resources, and scheduling a Downlink (DL) reception on the symbol to the UE if a frequency resource of the DL reception is not within the one or more first frequency resources.

In various embodiments, with this and other concepts, systems, and methods of the present invention, a method for a UE in a wireless communication system comprises receiving indication of one or more first frequency resources from a base station, wherein the one or more first frequency resources are associated with an UL on a symbol, and canceling a configured DL reception on the symbol if a frequency resource of the configured DL reception is within the one or more first frequency resources.

**BRIEF DESCRIPTION OF THE DRAWINGS**

FIG. 1 shows a diagram of a wireless communication system, in accordance with embodiments of the present invention.

FIG. 2 is a block diagram of a transmitter system (also known as access network) and a receiver system (also known as user equipment or UE), in accordance with embodiments of the present invention.

FIG. 3 is a functional block diagram of a communication system, in accordance with embodiments of the present invention.

FIG. 4 is a functional block diagram of the program code of FIG. 3, in accordance with embodiments of the present invention.

FIG. 5 is a flow diagram of a UE handling reception/transmission whose frequency resource(s) is within a first frequency resource based on a first SFI, in accordance with embodiments of the present invention.

FIG. 6 is a flow diagram of a UE performing first and second actions related to collision handling, in accordance with embodiments of the present invention.

FIG. 7 is a flow diagram of a UE receiving indication of a first frequency resource(s) and receiving indication of or deriving a second frequency resource(s), in accordance with embodiments of the present invention.

FIG. 8 is a flow diagram of a base station transmitting indication of a first frequency resource(s), scheduling an UL transmission, and scheduling a DL reception, in accordance with embodiments of the present invention.

FIG. 9 is a flow diagram of a UE receiving indication of a first frequency resource(s) and canceling a configured DL reception, in accordance with embodiments of the present invention.

FIG. 10 is a flow diagram of a UE receiving indication of one or more first frequency resources and receiving indication of, or deriving, one or more second frequency resources, in accordance with embodiments of the present invention.

FIG. 11 is a flow diagram of a base station transmitting indication of one or more first frequency resources, scheduling an UL transmission, and scheduling a DL reception, in accordance with embodiments of the present invention.

FIG. 12 is a flow diagram of a UE receiving indication of one or more first frequency resources and canceling a configured DL reception, in accordance with embodiments of the present invention.

## DETAILED DESCRIPTION

The invention described herein can be applied to or implemented in exemplary wireless communication systems and devices described below. In addition, the invention is described mainly in the context of the 3GPP architecture reference model. However, it is understood that with the disclosed information, one skilled in the art could easily adapt for use and implement aspects of the invention in a 3GPP2 network architecture as well as in other network architectures.

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A (Long Term Evolution Advanced) wireless access, 3GPP2 UMB (Ultra Mobile Broadband), WiMax, 3GPP NR (New Radio), or some other modulation techniques.

In particular, the exemplary wireless communication systems and devices described below may be designed to support one or more standards such as the standard offered by a consortium named "3rd Generation Partnership Project" referred to herein as 3GPP, including: [1] 3GPP TS 38.211 V15.7.0, "NR physical channels and modulation"; [2] 3GPP TS 38.213 V16.6.0, "NR Physical layer procedures for control"; and [3] RP-212707, "Draft SID on Evolution of NR Duplex Operation". The standards and documents listed above are hereby expressly and fully incorporated herein by reference in their entirety.

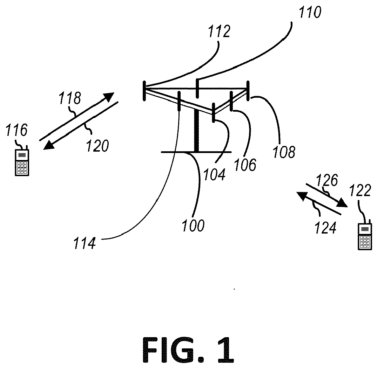

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal (AT) 116 is in communication with antennas 112 and 114, where antennas 112 and 114 transmit information to access terminal 116 over forward link 120 and receive information from AT 116 over reverse link 118. AT 122 is in communication with antennas 106 and 108, where antennas 106 and 108 transmit information to AT 122 over forward link 126 and receive information from AT 122 over reverse link 124. In a FDD system, communication links 118, 120, 124 and 126 may use different frequency for communication. For example, forward link 120 may use a different frequency than that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage normally causes less interference to access terminals in neighboring cells than an access network transmitting through a single antenna to all its access terminals.

The AN may be a fixed station or base station used for communicating with the terminals and may also be referred to as an access point, a Node B, a base station, an enhanced base station, an eNodeB, or some other terminology. The AT may also be called User Equipment (UE), a wireless communication device, terminal, access terminal or some other terminology.

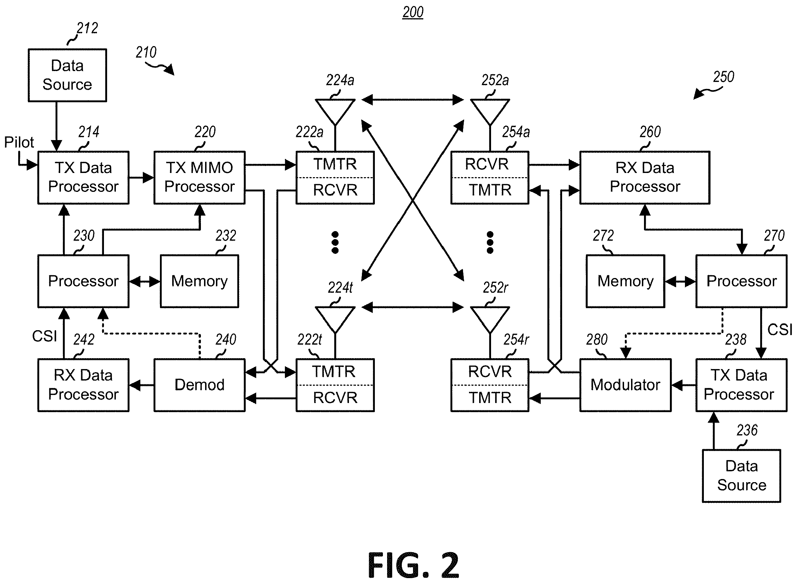

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (e.g., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230. A memory 232 is coupled to processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

Memory 232 may be used to temporarily store some buffered/computational data from 240 or 242 through Processor 230, store some buffed data from 212, or store some specific program codes. And Memory 272 may be used to temporarily store some buffered/computational data from 260 through Processor 270, store some buffed data from 236, or store some specific program codes.

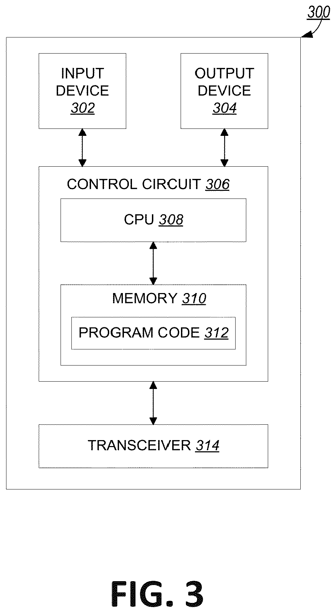

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the NR system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

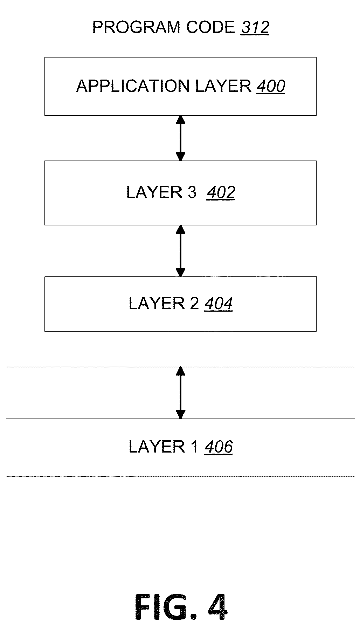

FIG. 4 is a simplified block diagram of the program code 312 shown in FIG. 3 in accordance with an embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

For LTE, LTE-A, or NR systems, the Layer 2 portion 404 may include a Radio Link Control (RLC) layer and a Medium Access Control (MAC) layer. The Layer 3 portion 402 may include a Radio Resource Control (RRC) layer.

Any two or more than two of the following paragraphs, (sub-)bullets, points, actions, or claims described in each invention paragraph or section may be combined logically, reasonably, and properly to form a specific method.

Any sentence, paragraph, (sub-)bullet, point, action, or claim described in each of the following invention paragraphs or sections may be implemented independently and separately to form a specific method or apparatus. Dependency, e.g., "based on", "more specifically", "example", etc., in the following invention disclosure is just one possible embodiment which would not restrict the specific method or apparatus.

Frame structure used in New RAT (NR) for 5G, to accommodate various type of requirement (e.g., [1] 3GPP TS 38.211 V15.7.0, "NR physical channels and modulation") for time and frequency resource, e.g., from ultra-low latency (~0.5 ms) to delay-tolerant traffic for MTC, from high peak rate for eMBB to very low data rate for MTC. An important focus of this study is low latency aspect, e.g., short TTI, while other aspect of mixing/adapting different TTIs can also be considered in the study. In addition to diverse services and requirements, forward compatibility is an important consideration in initial NR frame structure design as not all features of NR would be included in the beginning phase/release.

Reducing latency of protocol is an important improvement between different generations/releases, which can improve efficiency as well as meeting new application requirements, e.g., real-time service. An effective method frequently adopted to reduce latency is to reduce the length of TTIs, from 10 ms in 3G to 1 ms in LTE.

When it comes to NR, the story becomes somehow different, as backward compatibility is not a must. Numerology can be adjusted so that reducing symbol number of a TTI would not be the only tool to change TTI length. Using LTE numerology as an example, it comprises 14 OFDM symbol in 1 ms and a subcarrier spacing of 15 KHz. When the subcarrier spacing goes to 30KHz, under the assumption of same FFT size and same CP structure, there would be 28 OFDM symbols in 1 ms, equivalently the TTI become 0.5 ms if the number of OFDM symbol in a TTI is kept the same. This implies the design between different TTI lengths can be kept common, with good scalability performed on the subcarrier spacing. Of course there would always be trade-off for the subcarrier spacing selection, e.g., FFT size, definition/number of PRB, the design of CP, supportable system bandwidth, etc. While as NR considers larger system bandwidth, and larger coherence bandwidth, inclusion of a larger sub carrier spacing is a nature choice.

More details of NR frame structure, channel and numerology design is given below from [1] 3GPP TS 38.211 V15.7.0.

\*\*\*\*\*\*\*\*\*\*\*\*\*\*\*\*\*\*\*\*\*\*\*\*\*\*\*\*\*\*\*\*\*\*\*\*\*Quotation Start\*\*\*\*\*\*\*\*\*\*\*\*\*\*\*\*\*\*\*\*\*\*\*\*\*\*\*\*\*\*\*\*\*\*\*\*\*\*\*\*\*

## 4 Frame structure and physical resources

### 4.1 General

Throughout this specification, unless otherwise noted, the size of various fields in the time domain is expressed in time units $T_c = 1/(\Delta f_{max} \cdot N_f)$ where $\Delta f_{max} = 480 \cdot 10^3$ Hz and $N_f = 4096$. The constant $\kappa = T_s/T_c = 64$ where $T_s = 1/(\Delta f_{ref} \cdot N_{f,ref})$, $\Delta f_{ref} = 15 \cdot 10^3$ Hz and $N_{f,ref} = 2048$ .

### 4.2 Numerologies

Multiple OFDM numerologies are supported as given by Table 4.2-1 where $\mu$ and the cyclic prefix for a bandwidth part are obtained from the higher-layer parameter *subcarrierSpacing* and *cyclicPrefix,* respectively.

**Table 4.2-1: Supported transmission numerologies.**

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

4.3 Frame structure

4.3.2 Slots

For subcarrier spacing configuration $\mu$, slots are numbered $n_s^{\mu} \in \left\{ 0, \ldots, N_{\text{slot}}^{\text{subframe},\mu} - 1 \right\}$ in increasing order within a subframe and $n_{s,f}^{\mu} \in \left\{ 0, \ldots, N_{\text{slot}}^{\text{frame},\mu} - 1 \right\}$ in increasing order within a frame. There are $N_{\text{symb}}^{\text{slot}}$ consecutive OFDM symbols in a slot where $N_{\text{symb}}^{\text{slot}}$ depends on the cyclic prefix as given by Tables 4.3.2-1 and 4.3.2-2. The start of slot $n_s^{\mu}$ in a subframe is aligned in time with the start of OFDM symbol $n_s^{\mu} N_{\text{symb}}^{\text{slot}}$ in the same subframe.

OFDM symbols in a slot can be classified as 'downlink', 'flexible', or 'uplink'. Signaling of slot formats is described in subclause 11.1 of [5, TS 38.213].

In a slot in a downlink frame, the UE shall assume that downlink transmissions only occur in 'downlink' or 'flexible' symbols.

In a slot in an uplink frame, the UE shall only transmit in 'uplink' or 'flexible' symbols.

A UE not capable of full-duplex communication and not supporting simultaneous transmission and reception as defined by paremeter *simultaneousRxTxInterBandENDC, simultaneousRxTxInterBandCA or simultaneousRxTxSUL* [10, TS 38.306] among all cells within a group of cells is not expected to transmit in the uplink in one cell within the group of cells earlier than $N_{\text{Rx-Tx}} T_c$ after the end of the last received downlink symbol in the same or different cell within the group of cells where $N_{\text{Rx-Tx}}$ is given by Table 4.3.2-3.

A UE not capable of full-duplex communication and not supporting simultaneous transmission and reception as defined by parameter *simultaneousRxTxInterBandENDC, simultaneousRxTxInterBandCA or simultaneousRxTxSUL* [10, TS 38.306] among all cells within a group of cells is not expected to receive in the downlink in one cell within the group of cells earlier than $N_{\text{Tx-Rx}} T_c$ after the end of the last transmitted uplink symbol in the same or different cell within the group of cells where $N_{\text{Tx-Rx}}$ is given by Table 4.3.2-3.

A UE not capable of full-duplex communication is not expected to transmit in the uplink earlier than $N_{\text{Rx-Tx}} T_c$ after the end of the last received downlink symbol in the same cell where $N_{\text{Rx-Tx}}$ is given by Table 4.3.2-3.

A UE not capable of full-duplex communication is not expected to receive in the downlink earlier than $N_{\text{Tx-Rx}} T_c$ after the end of the last transmitted uplink symbol in the same cell where $N_{\text{Tx-Rx}}$ is given by Table 4.3.2-3.

4.4 Physical resources

4.4.2 Resource grid

For each numerology and carrier, a resource grid of $N_{\text{grid},x}^{\text{size},\mu} N_{\text{sc}}^{\text{RB}}$ subcarriers and $N_{\text{symb}}^{\text{subframe},\mu}$ OFDM symbols is defined, starting at common resource block $N_{\text{grid}}^{\text{start},\mu}$ indicated by higher-layer signalling. There is one set of resource grids per transmission direction (uplink or downlink) with the subscript x set to DL and UL for downlink and uplink, respectively. When there is no risk for confusion, the subscript x may be dropped. There is one resource grid for a given antenna port p, subcarrier spacing configuration $\mu$, and transmission direction (downlink or uplink).

The carrier bandwidth $N_{\text{grid}}^{\text{size},\mu}$ for subcarrier spacing configuration $\mu$ is given by the higher-layer parameter *carrierBandwidth* in the *SCS-SpecificCarrier* IE. The starting position $N_{\text{grid}}^{\text{start},\mu}$ for subcarrier spacing configuration $\mu$ is given by the higher-layer parameter *offsetToCarrier* in the *SCS-SpecificCarrier* IE.

The frequency location of a subcarrier refers to the center frequency of that subcarrier.

For the downlink, the higher-layer parameter *txDirectCurrentLocation* in the *SCS-SpecificCarrier* IE indicates the location of the transmitter DC subcarrier in the downlink for each of the numerologies configured in the downlink. Values in the range 0 - 3299 represent the number of the DC subcarrier and the value 3300 indicates that the DC subcarrier is located outside the resource grid.

For the uplink, the higher-layer parameter *txDirectCurrentLocation* in the *UplinkTxDirectCurrentBWP* IE indicates the location of the transmitter DC subcarrier in the uplink for each of the configured bandwidth parts, including whether the DC subcarrier location is offset by 7.5 kHz relative to the center of the indicated subcarrier or not. Values in the range 0 - 3299 represent the number of the DC subcarrier, the value 3300 indicates that the DC subcarrier is located outside the resource grid, and the value 3301 indicates that the position of the DC subcarrier in the uplink is undetermined.

### 4.4.3 Resource elements

Each element in the resource grid for antenna port $p$ and subcarrier spacing configuration $\mu$ is called a resource element and is uniquely identified by $(k, l)_{p,\mu}$ where $k$ is the index in the frequency domain and $l$ refers to the symbol position in the time domain relative to some reference point. Resource element $(k, l)_{p,\mu}$ corresponds to a physical resource and the complex value $a_{k,l}^{(p,\mu)}$. When there is no risk for confusion, or no particular antenna port or subcarrier spacing is specified, the indices $p$ and $\mu$ may be dropped, resulting in $a_{k,l}^{(p)}$ or $a_{k,l}$.

### 4.4.4 Resource blocks

### 4.4.4.1 General

A resource block is defined as $N_{sc}^{RB} = 12$ consecutive subcarriers in the frequency domain.

### 4.4.4.2 Point A

Point A serves as a common reference point for resource block grids and is obtained from:

- *offsetToPointA* for a PCell downlink where *offsetToPointA* represents the frequency offset between point A and the lowest subcarrier of the lowest resource block, which has the subcarrier spacing provided by the higher-layer parameter *subCarrierSpacingCommon* and overlaps with the SS/PBCH block used by the UE for initial cell selection, expressed in units of resource blocks assuming 15 kHz subcarrier spacing for FR1 and 60 kHz subcarrier spacing for FR2;
- *absoluteFrequencyPointA* for all other cases where *absoluteFrequencyPointA* represents the frequency-location of point A expressed as in ARFCN.

### 4.4.4.3 Common resource blocks

Common resource blocks are numbered from 0 and upwards in the frequency domain for subcarrier spacing configuration $\mu$. The center of subcarrier 0 of common resource block 0 for subcarrier spacing configuration $\mu$ coincides with 'point A'.

The relation between the common resource block number $n_{CRB}^{\mu}$ in the frequency domain and resource elements $(k,l)$ for subcarrier spacing configuration $\mu$ is given by

$$n_{CRB}^{\mu} = \left\lfloor \frac{k}{N_{sc}^{RB}} \right\rfloor$$

where $k$ is defined relative to point A such that $k = 0$ corresponds to the subcarrier centered around point A.

### 4.4.4.4 Physical resource blocks

Physical resource blocks for subcarrier configuration $\mu$ are defined within a bandwidth part and numbered from 0 to $N_{BWP,i}^{size,\mu} - 1$ where i is the number of the bandwidth part. The relation between the physical resource block $n_{PRB}^{\mu}$ in bandwidth part i and the common resource block $n_{CRB}^{\mu}$ is given by

$$n_{\mathrm{CRB}}^{\mu} = n_{\mathrm{PRB}}^{\mu} + N_{\mathrm{BWP},i}^{\mathrm{start},\mu}$$

where $N_{\mathrm{BWP},i}^{\mathrm{start},\mu}$ is the common resource block where bandwidth part starts relative to common resource block 0. When there is no risk for confusion the index $\mu$ may be dropped.

### 4.4.5 Bandwidth part

A bandwidth part is a subset of contiguous common resource blocks defined in subclause 4.4.4.3 for a given numerology $\mu_i$ in bandwidth part $i$ on a given carrier. The starting position $N_{\mathrm{BWP},i}^{\mathrm{start},\mu}$ and the number of resource blocks $N_{\mathrm{BWP},i}^{\mathrm{size},\mu}$ in a bandwidth part shall fulfil $N_{\mathrm{grid},x}^{\mathrm{start},\mu} \le N_{\mathrm{BWP},i}^{\mathrm{start},\mu} < N_{\mathrm{grid},x}^{\mathrm{start},\mu} + N_{\mathrm{grid},x}^{\mathrm{size},\mu}$ and $N_{\mathrm{grid},x}^{\mathrm{start},\mu} < N_{\mathrm{BWP},i}^{\mathrm{start},\mu} + N_{\mathrm{BWP},i}^{\mathrm{size},\mu} \le N_{\mathrm{grid},x}^{\mathrm{start},\mu} + N_{\mathrm{grid},x}^{\mathrm{size},\mu}$, respectively. Configuration of a bandwidth part is described in clause 12 of [5, TS 38.213].

A UE can be configured with up to four bandwidth parts in the downlink with a single downlink bandwidth part being active at a given time. The UE is not expected to receive PDSCH, PDCCH, or CSI-RS (except for RRM) outside an active bandwidth part.

A UE can be configured with up to four bandwidth parts in the uplink with a single uplink bandwidth part being active at a given time. If a UE is configured with a supplementary uplink, the UE can in addition be configured with up to four bandwidth parts in the supplementary uplink with a single supplementary uplink bandwidth part being active at a given time. The UE shall not transmit PUSCH or PUCCH outside an active bandwidth part. For an active cell, the UE shall not transmit SRS outside an active bandwidth part.

Unless otherwise noted, the description in this specification applies to each of the bandwidth parts. When there is no risk of confusion, the index $\mu$ may be dropped from $N_{\mathrm{BWP},i}^{\mathrm{start},\mu}$, $N_{\mathrm{BWP},i}^{\mathrm{size},\mu}$, $N_{\mathrm{grid},x}^{\mathrm{start},\mu}$, and $N_{\mathrm{grid},x}^{\mathrm{size},\mu}$.

\*\*\*\*\*\*\*\*\*\*\*\*\*\*\*\*\*\*\*\*\*\*\*\*\*\*\*\*\*\*\*\*\*\*\*Quotation End\*\*\*\*\*\*\*\*\*\*\*\*\*\*\*\*\*\*\*\*\*\*\*\*\*\*\*\*\*\*\*\*\*\*\*\*\*\*\*

Slot format information (SFI) is introduced to indicate transmission direction for a symbol(s), e.g., DL, UL or Flexible. SFI could be indicated or revealed by several signals, such as RRC configuration, DCI for SFI, scheduling DCI. Some handling would be then required if more than one direction is indicated to a symbol. More details regarding SFI is quoted below from [2] 3GPP TS 38.213 V16.6.0.

\*\*\*\*\*\*\*\*\*\*\*\*\*\*\*\*\*\*\*\*\*\*\*\*\*\*\*\*\*\*\*\*\*\*\*Quotation Start\*\*\*\*\*\*\*\*\*\*\*\*\*\*\*\*\*\*\*\*\*\*\*\*\*\*\*\*\*\*\*\*\*\*\*\*\*

### 11.1 Slot configuration

A slot format includes downlink symbols, uplink symbols, and flexible symbols.

The following are applicable for each serving cell.

If a UE is provided *tdd-UL-DL-ConfigurationCommon,* the UE sets the slot format per slot over a number of slots as indicated by *tdd-UL-DL-ConfigurationCommon.*

If the UE is additionally provided *tdd-UL-DL-ConfigurationDedicated,* the parameter *tdd-UL-DL-ConfigurationDedicated* overrides only flexible symbols per slot over the number of slots as provided by *tdd-UL-DL-ConfigurationCommon.*

For each slot having a corresponding index provided by *slotIndex,* the UE applies a format provided by a corresponding *symbols.* The UE does not expect *tdd-UL-DL-ConfigurationDedicated* to indicate as uplink or as downlink a symbol that *tdd-UL-DL-ConfigurationCommon* indicates as a downlink or as an uplink symbol, respectively.

A slot configuration period and a number of downlink symbols, uplink symbols, and flexible symbols in each slot of the slot configuration period are determined from *tdd-UL-DL-ConfigurationCommon* and *tdd-UL-DL-ConfigurationDedicated* and are common to each configured BWP.

A UE considers symbols in a slot indicated as downlink by *tdd-UL-DL-ConfigurationCommon,* or *tdd-UL-DL-*

*ConfigurationDedicated* to be available for receptions and considers symbols in a slot indicated as uplink by *tdd-UL-DL-ConfigurationCommon,* or by *tdd-UL-DL-ConfigurationDedicated* to be available for transmissions.

If a UE is not configured to monitor PDCCH for DCI format 2_0, for a set of symbols of a slot that are indicated as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE

-    the UE receives PDSCH or CSI-RS in the set of symbols of the slot if the UE receives a corresponding indication by a DCI format

-    the UE transmits PUSCH, PUCCH, PRACH, or SRS in the set of symbols of the slot if the UE receives a corresponding indication by a DCI format, a RAR UL grant, fallbackRAR UL grant, or successRAR

For operation on a single carrier in unpaired spectrum, if a UE is configured by higher layers to receive a PDCCH, or a PDSCH, or a CSI-RS, or a DL PRS in a set of symbols of a slot, the UE receives the PDCCH, the PDSCH, the CSI-RS, or the DL PRS if the UE does not detect a DCI format that indicates to the UE to transmit a PUSCH, a PUCCH, a PRACH, or a SRS in at least one symbol of the set of symbols of the slot; otherwise, the UE does not receive the PDCCH, or the PDSCH, or the CSI-RS, or the DL PRS in the set of symbols of the slot.

For a set of symbols of a slot that are indicated to a UE as uplink by *tdd-UL-DL-ConfigurationCommon,* or *tdd-UL-DL-ConfigurationDedicated,* the UE does not receive PDCCH, PDSCH, or CSI-RS when the PDCCH, PDSCH, or CSI-RS overlaps, even partially, with the set of symbols of the slot.

For a set of symbols of a slot that are indicated to a UE as uplink by *tdd-UL-DL-ConfigurationCommon,* or *tdd-UL-DL-ConfigurationDedicated,* the UE does not receive DL PRS in the set of symbols of the slot, if the UE is not provided with a measurement gap.

For a set of symbols of a slot that are indicated to a UE as downlink by *tdd-UL-DL-ConfigurationCommon,* or *tdd-UL-DL-ConfigurationDedicated,* the UE does not transmit PUSCH, PUCCH, PRACH, or SRS when the PUSCH, PUCCH, PRACH, or SRS overlaps, even partially, with the set of symbols of the slot.

For a set of symbols of a slot that are indicated to a UE as flexible by *tdd-UL-DL-ConfigurationCommon,* and *tdd-UL-DL-ConfigurationDedicated* if provided, the UE does not expect to receive both dedicated higher layer parameters configuring transmission from the UE in the set of symbols of the slot and dedicated higher layer parameters configuring reception by the UE in the set of symbols of the slot.

For operation on a single carrier in unpaired spectrum, for a set of symbols of a slot indicated to a UE by *ssb-PositionsInBurst* in *SIB1* or *ssb-PositionsInBurst* in *ServingCellConfigCommon,* for reception of SS/PBCH blocks, the

UE does not transmit PUSCH, PUCCH, PRACH in the slot if a transmission would overlap with any symbol from the set of symbols and the UE does not transmit SRS in the set of symbols of the slot. The UE does not expect the set of symbols of the slot to be indicated as uplink by *tdd-UL-DL-ConfigurationCommon,* or *tdd-UL-DL-ConfigurationDedicated,* when provided to the UE.

For a set of symbols of a slot corresponding to a valid PRACH occasion and $N_{\mathrm{gap}}$ symbols before the valid PRACH occasion, as described in clause 8.1, the UE does not receive PDCCH, PDSCH, or CSI-RS in the slot if a reception would overlap with any symbol from the set of symbols. The UE does not expect the set of symbols of the slot to be indicated as downlink by *tdd-UL-DL-ConfigurationCommon* or *tdd-UL-DL-ConfigurationDedicated.*

For a set of symbols of a slot indicated to a UE by *pdcch-ConfigSIB1* in *MIB* for a CORESET for TypeO-PDCCH CSS set, the UE does not expect the set of symbols to be indicated as uplink by *tdd-UL-DL-ConfigurationCommon,* or *tdd-UL-DL-ConfigurationDedicated.*

11.1.1 UE procedure for determining slot format

This clause applies for a serving cell that is included in a set of serving cells configured to a UE by *slotFormat-CombToAddModList* and *slotFormatCombToReleaseList, availableRB-SetsToAddModList* and *availableRB-SetsToRelease, switchTriggerToAddModList* and *switchTriggerToReleaseList,* or *co-DurationsPerCellToAddModList* and *co-DurationsPerCellToReleaseList.*

If a UE is configured by higher layers with parameter *SlotFormatIndicator,* the UE is provided an SFI-RNTI by *sfi-RNTI* and with a payload size of DCI format 2_0 by *dci-PayloadSize.*

The UE is also provided in one or more serving cells with a configuration for a search space set *s* and a corresponding CORESET *p* for monitoring $M_{p,s}^{(L_{\mathrm{SFI}})}$ PDCCH candidates for DCI format 2_0 with a CCE aggregation level of $L_{\mathrm{SFI}}$ CCEs as described in clause 10.1. The $M_{p,s}^{(L_{\mathrm{SFI}})}$ PDCCH candidates are the first $M_{p,s}^{(L_{\mathrm{SFI}})}$ PDCCH candidates

for CCE aggregation level $L_{SFI}$ for search space set s in CORESET p.

For each serving cell in the set of serving cells, the UE can be provided:

- an identity of the serving cell by *servingCellId*

- a location of a SFI-index field in DCI format 2_0 by *positionInDCI*

- a set of slot format combinations by *slotFormatCombinations,* where each slot format combination in the set of slot format combinations includes

    - one or more slot formats indicated by a respective *slotFormats* for the slot format combination, and

    - a mapping for the slot format combination provided by *slotFormats* to a corresponding SFI-index field value in DCI format 2_0 provided by *slotFormatCombinationId*

- for unpaired spectrum operation, a reference SCS configuration $\mu_{SFI}$ by *subcarrierSpacing* and, when a supplementary UL carrier is configured for the serving cell, a reference SCS configuration $\mu_{SFI,SUL}$ by *subcarrierSpacing2* for the supplementary UL carrier

- for paired spectrum operation, a reference SCS configuration $\mu_{ISFI,DL}$ for a DL BWP by *subcarrierSpacing* and a reference SCS configuration $\mu_{SFI,UL}$ for an UL BWP by *subcarrierSpacing2*

A SFI-index field value in a DCI format 2_0 indicates to a UE a slot format for each slot in a number of slots for each DL BWP or each UL BWP starting from a slot where the UE detects the DCI format 2_0. The number of slots is equal to or larger than a PDCCH monitoring periodicity for DCI format 2_0. The SFI-index field includes

$$\max\left\{\left\lceil \log_2\left(\text{maxSFIindex}+1\right)\right\rceil,1\right\}$$ bits where maxSFIindex is the maximum value of the values provided by corresponding *slotFormatCombinationId.* A slot format is identified by a corresponding format index as provided in Table 11.1.1-1 where 'D' denotes a downlink symbol, 'U' denotes an uplink symbol, and 'F' denotes a flexible symbol.

If a PDCCH monitoring periodicity for DCI format 2_0, provided to a UE for the search space set *S* by *monitoringSlotPeriodicityAndOffset,* is smaller than a duration of a slot format combination the UE obtains at a PDCCH monitoring occasion for DCI format 2_0 by a corresponding SFI-index field value, and the UE detects more than one DCI formats 2_0 indicating a slot format for a slot, the UE expects each of the more than one DCI formats 2_0 to indicate a same format for the slot.

For a set of symbols of a slot, a UE does not expect to detect a DCI format 2_0 with an SFI-index field value indicating the set of symbols of the slot as uplink and to detect a DCI format indicating to the UE to receive PDSCH or CSI-RS in the set of symbols of the slot.

For a set of symbols of a slot, a UE does not expect to detect a DCI format 2_0 with an SFI-index field value indicating the set of symbols in the slot as downlink and to detect a DCI format, a RAR UL grant, fallbackRAR UL grant, or successRAR indicating to the UE to transmit PUSCH, PUCCH, PRACH, or SRS in the set of symbols of the slot.

For a set of symbols of a slot that are indicated as downlink/uplink by *tdd-UL-DL-ConfigurationCommon,* or *tdd-UL-DL-ConfigurationDedicated,* the UE does not expect to detect a DCI format 2_0 with an SFI-index field value indicating the set of symbols of the slot as uplink/downlink, respectively, or as flexible.

For a set of symbols of a slot corresponding to SS/PBCH blocks with candidate SS/PBCH block indices corresponding to the SS/PBCH block indexes indicated to a UE by *ssb-PositionsInBurst* in *SIB1,* or by *ssb-PositionsInBurst* in *ServingCellConfigCommon,* as described in clause 4.1, the UE does not expect to detect a DCI format 2_0 with an SFI-index field value indicating the set of symbols of the slot as uplink.

For a set of symbols of a slot corresponding to a valid PRACH occasion and $N_{gap}$ symbols before the valid PRACH occasion, as described in clause 8.1, the UE does not expect to detect a DCI format 2_0 with an SFI-index field value indicating the set of symbols of the slot as downlink.

For a set of symbols of a slot indicated to a UE by *pdcch-ConfigSIB1* in *MIB* for a CORESET for TypeO-PDCCH CSS set, the UE does not expect to detect a DCI format 2_0 with an SFI-index field value indicating the set of symbols of the slot as uplink.

For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255

- if one or more symbols from the set of symbols are symbols in a CORESET configured to the UE for PDCCH monitoring, the UE receives PDCCH in the CORESET only if an SFI-index field value in DCI format 2_0 indicates that the one or more symbols are downlink symbols

- if an SFI-index field value in DCI format 2_0 indicates the set of symbols of the slot as flexible and the UE detects a DCI format indicating to the UE to receive PDSCH or CSI-RS in the set of symbols of the slot, the UE receives PDSCH or CSI-RS in the set of symbols of the slot

- if an SFI-index field value in DCI format 2_0 indicates the set of symbols of the slot as flexible and the UE detects a DCI format, a RAR UL grant, fallbackRAR UL grant, or successRAR indicating to the UE to transmit PUSCH, PUCCH, PRACH, or SRS in the set of symbols of the slot the UE transmits the PUSCH, PUCCH, PRACH, or SRS in the set of symbols of the slot

- if an SFI-index field value in DCI format 2_0 indicates the set of symbols of the slot as flexible, and the UE does not detect a DCI format indicating to the UE to receive PDSCH or CSI-RS, or the UE does not detect a DCI format, a RAR UL, fallbackRAR UL grant, or successRAR grant indicating to the UE to transmit PUSCH, PUCCH, PRACH, or SRS in the set of symbols of the slot, the UE does not transmit or receive in the set of symbols of the slot

- if the UE is configured by higher layers to receive PDSCH or CSI-RS in the set of symbols of the slot, the UE receives the PDSCH or the CSI-RS in the set of symbols of the slot only if an SFI-index field value in DCI format 2_0 indicates the set of symbols of the slot as downlink and, if applicable, the set of symbols is within remaining channel occupancy duration

- if the UE is configured by higher layers to receive DL PRS in the set of symbols of the slot, the UE receives the DL PRS in the set of symbols of the slot only if an SFI-index field value in DCI format 2_0 indicates the set of symbols of the slot as downlink or flexible.

- if the UE is configured by higher layers to transmit PUCCH, or PUSCH, or PRACH in the set of symbols of the slot, the UE transmits the PUCCH, or the PUSCH, or the PRACH in the slot only if an SFI-index field value in DCI format 2_0 indicates the set of symbols of the slot as uplink

- if the UE is configured by higher layers to transmit SRS in the set of symbols of the slot, the UE transmits the SRS only in a subset of symbols from the set of symbols of the slot indicated as uplink symbols by an SFI-index field value in DCI format 2_0

- a UE does not expect to detect an SFI-index field value in DCI format 2_0 indicating the set of symbols of the slot as downlink and also detect a DCI format, a RAR UL grant, fallbackRAR UL grant, or successRAR indicating to the UE to transmit SRS, PUSCH, PUCCH, or PRACH, in one or more symbols from the set of symbols of the slot

- a UE does not expect to detect an SFI-index field value in DCI format 2_0 indicating the set of symbols of the slot as downlink or flexible if the set of symbols of the slot includes symbols corresponding to any repetition of a PUSCH transmission activated by an UL Type 2 grant PDCCH as described in clause 10.2

- a UE does not expect to detect an SFI-index field value in DCI format 2_0 indicating the set of symbols of the slot as uplink and also detect a DCI format indicating to the UE to receive PDSCH or CSI-RS in one or more symbols from the set of symbols of the slot

If a UE is configured by higher layers to receive a CSI-RS or a PDSCH in a set of symbols of a slot and the UE detects a DCI format 2_0 with a slot format value other than 255 that indicates a slot format with a subset of symbols from the set of symbols as uplink or flexible, or the UE detects a DCI format indicating to the UE to transmit PUSCH, PUCCH, SRS, or PRACH in at least one symbol in the set of the symbols, the UE cancels the CSI-RS reception in the set of symbols of the slot or cancels the PDSCH reception in the slot.

If a UE is configured by higher layers to receive a DL PRS in a set of symbols of a slot and the UE detects a DCI format 2_0 with a slot format value other than 255 that indicates a slot format with a subset of symbols from the set of symbols as uplink, or the UE detects a DCI format indicating to the UE to transmit PUSCH, PUCCH, SRS, or PRACH in at least one symbol in the set of the symbols, the UE cancels the DL PRS reception in the set of symbols of the slot.

A UE assumes that flexible symbols in a CORESET configured to the UE for PDCCH monitoring are downlink symbols if the UE does not detect an SFI-index field value in DCI format 2_0 indicating the set of symbols of the slot as flexible or uplink and the UE does not detect a DCI format indicating to the UE to transmit SRS, PUSCH, PUCCH, or PRACH in the set of symbols.

For a set of symbols of a slot that are indicated as flexible by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot

- the UE receives PDSCH or CSI-RS in the set of symbols of the slot if the UE receives a corresponding indication by a DCI format

- the UE transmits PUSCH, PUCCH, PRACH, or SRS in the set of symbols of the slot if the UE receives a corresponding indication by a DCI format, a RAR UL grant, fallbackRAR UL grant, or successRAR

- the UE receives PDCCH as described in clause 10.1

- if the UE is configured by higher layers to receive PDSCH in the set of symbols of the slot, the UE does not receive the PDSCH in the set of symbols of the slot

- if the UE is configured by higher layers to receive CSI-RS in the set of symbols of the slot, the UE does not receive the CSI-RS in the set of symbols of the slot, except when UE is provided *CO-DurationsPerCell* and the set of symbols of the slot are within the remaining channel occupancy duration.

- if the UE is configured by higher layers to receive DL PRS in the set of symbols of the slot, the UE receives the DL PRS

- if the UE is configured by higher layers to transmit SRS, or PUCCH, or PUSCH, or PRACH in the set of symbols of the slot and the UE is provided *enableConfiguredUL,* the UE can transmit the SRS, or PUCCH, or PUSCH, or PRACH, respectively.

*********************************Quotation End*********************************

Duplexing enhancement has been discussed in 3GPP to enable more frequent UL so as to improve latency and UL coverage. UL transmission and DL transmission could occur on a same symbol for unpaired spectrum (e.g., TDD). More detail regarding duplexing could be found below from [3] RP-212707.

*********************************Quotation Start*********************************

In this study, the followings are assumed:

• Duplex enhancement at the gNB side

• Half duplex operation at the UE side

• No restriction on frequency ranges

The detailed objectives are as follows:

• Identify applicable and relevant deployment scenarios and use cases (RANI).

• Develop evaluation methodology for duplex enhancement (RANI).

• Study the subband non-overlapping full duplex and potential enhancements on dynamic/flexible TDD.

- Identify possible schemes and evaluate their feasibility and performances (RANI).

\*\*\*\*\*\*\*\*\*\*\*\*\*\*\*\*\*\*\*\*\*\*\*\*\*\*\*\*\*\*\*\*\*Quotation End\*\*\*\*\*\*\*\*\*\*\*\*\*\*\*\*\*\*\*\*\*\*\*\*\*\*\*\*\*\*\*\*\*\*\*\*\*\*\*\*

**Issues and Solutions:**

Enhancement on duplexing scheme could have impact on how a User Equipment (UE) handles Downlink (DL) reception or Uplink (UL) transmission. For example, on a conventional DL symbol (e.g., without duplexing enhancement), a UE would not perform UL transmission on such symbol, e.g., cancel a configured UL transmission on the symbol or does not expect a Downlink Control Information (DCI) scheduled UL transmission on the symbol (e.g., a Network (NW) shall not perform such scheduling and/or UE consider such scheduling as an error case). Similar restrictions on DL reception could be applied for a conventional UL symbol. The indicated transmission direction applies to all/whole frequency resources of a bandwidth part/serving cell. However, when one symbol could support more than one transmission direction, e.g., for both DL and UL, under duplexing enhancements such restriction may not hold any longer. For example, a UE may be able to perform UL transmission on a symbol indicated as DL. Given the corresponding UE behaviors are different, whether and/or how the UE realizes how duplexing enhancement is applied and behave correctly and accordingly may require some further considerations.

A concept of this invention is to associate transmission direction(s) (e.g., one or more transmission directions) on a symbol(s) (e.g., one or more symbols) with frequency resource(s) (e.g., one or more frequency resources). The use of "(s)" with a word, term, or phrase herein means that "one or more" of that word, term, or phrase are contemplated and possible for various embodiments and aspects of the present invention.

In one example, a first transmission direction is associated with a first frequency resource(s). A second transmission direction is associated with a second frequency resource(s). The UE performs corresponding action for reception/transmission within the first frequency resource(s) based on the first transmission direction. The UE performs corresponding action for reception/transmission within the second frequency resource(s) based on the second transmission direction. For example, a UE is indicated DL for a first frequency resource(s) for a symbol and is indicated UL for a second resource(s) for the symbol. The UE would cancel a configured UL transmission on the symbol or consider a scheduled UL transmission on the symbol an error case if/when frequency resource(s) of configured UL transmission or scheduled UL transmission is within the first frequency resource(s). The UE would perform a configured UL transmission or a scheduled UL transmission on the symbol if/when frequency resource(s) of configured UL transmission or scheduled UL transmission is within the second frequency resource(s). In another example, a first transmission direction is associated with a first frequency resource(s). The first transmission direction is not associated with a second frequency resource(s). The UE performs corresponding action for reception/transmission within the first frequency resource(s) based on the first transmission direction. The UE does not perform corresponding action for reception/transmission within the second frequency resource(s) based on the first transmission direction. For example, a UE is indicated DL for a first frequency resource(s) for a symbol. The UE is indicated DL and is not applied for a second frequency resource(s) for the symbol. The UE would cancel a configured UL transmission on the symbol or consider a scheduled UL transmission on the symbol an error case if/when frequency resource(s) of configured UL transmission or scheduled UL transmission is within the first frequency resource(s). The UE behaves as if DL is not indicated for the symbol for a configured UL transmission or a scheduled UL transmission if/when frequency resource(s) of configured UL transmission or scheduled UL transmission is within the second frequency resource(s). The UE would perform a configured UL transmission or a scheduled UL transmission on the symbol if/when frequency resource(s) of configured UL transmission or scheduled UL transmission is within the second frequency resource(s).

The first frequency resource(s) and/or the second frequency resource(s) could be resources within a bandwidth part and/or a serving cell. The first frequency resource(s) and/or the second frequency resource(s) could be all/whole resources within a bandwidth part and/or a serving cell. The UE could be indicated for both the first frequency resource(s) and the second frequency resource(s). The UE could be indicated for one of the first frequency resource(s) and the second frequency resource(s) and derive the other (e.g., The UE is indicated for the first frequency resource(s) and frequency resource(s) of a serving cell/ bandwidth part which is not within the first frequency resource(s) is the second frequency resource(s). The UE is indicated for the second frequency resource(s) and frequency resource(s) of a serving cell/ bandwidth part which is not within the second frequency resource(s) is the first frequency resource(s)). The UE may expect a reception/transmission would fall in either the first frequency resource(s) or the second frequency resource(s). The base station shall configure or schedule a transmission/reception so that frequency resource(s) of a transmission/reception would fall in either the first frequency resource(s) or the second frequency resource(s). The base station shall configure or schedule a transmission/reception so that frequency resource(s) of a transmission/reception is not across the first frequency resource(s) and the second frequency resource(s). When frequency resource(s) of a transmission/reception is across the first frequency resource(s) and the second frequency resource(s), the UE may take one of the actions/behaviors related to first frequency resource(s)/second frequency resource(s) (e.g., as described above). For example, if a UE cancels reception/transmission in any part of the frequency resource(s), e.g., due to frequency resources of the reception/transmission overlapping with the first frequency resource(s) or the second frequency resource(s), the UE cancels the whole reception/transmission (e.g., instead of part of it). When frequency resource(s) of a transmission/reception is across the first frequency resource(s) and the second frequency resource(s), the UE may take separate actions/behaviors for different frequency resource(s) of the transmission/reception (for example, cancel transmission/reception in part of the frequency resource(s) of the transmission/reception. And perform transmission/reception in another part of the frequency resource(s) of the transmission/reception).

Association between Slot Form Indicator (SFI)/transmission direction and frequency resource(s) could be indicated from a base station to a UE. The association could be configured via Radio Resource Control (RRC) signaling and/or indicated via Medium Access Control (MAC) Control Element (CE). The association could be indicated via DCI. The DCI could be monitored periodically. The DCI could indicate the association for a certain time period. The DCI updates the association when the association is changed. The association could be indicated together with SFI. The association could be indicated separately from SFI. For example, a first SFI-Radio Network Temporary Identifier (RNTI) and/or a first location of SFI field could be associated with a first frequency resource(s). A second SFI-RNTI and/or a second location of SFI field could be associated with a second frequency resource(s). SFI indicated by DCI associated with the first SFI-RNTI and/or the first location of SFI field could be associated with the first frequency resource(s). SFI indicated by DCI associated with the second SFI-RNTI and/or the second location of SFI field could be associated with the second frequency resource(s). A bitmap associated with a SFI could be used to indicate frequency resource(s) associated with the SFI. A Resource Indicator Value (RIV) value associated with a SFI could be used to indicate frequency resource(s) associated with the SFI. A bandwidth part associated with a SFI could be used to indicate frequency resource(s) associated with the SFI. A starting location(s) and a length(s) could be used to indicate the first frequency resource(s) and/or the second frequency resource(s). A starting Physical Resource Block (PRB(s)) and a bandwidth(s) could be used to indicate the first frequency resource(s) and/or the second frequency resource(s).

In one embodiment, a UE receives indication of a first frequency resource(s) from a base station. The UE receives a first SFI from the base station. The first frequency resource(s) is associated with the first SFI. The UE handles reception/transmission whose frequency resource(s) is within the first frequency resource(s) based on the first SFI. The UE does not handle reception/transmission whose frequency resource(s) is not within the first frequency resource(s) based on the first SFI. The UE can handle reception/transmission whose frequency resource(s) is not within the first frequency resource(s) as if the first SFI is not indicated/present. The UE cancels a configured (DL) reception on a symbol if/when the first SFI indicates the symbol as UL and frequency resource(s) of the configured reception is within the first frequency resource(s). The UE performs a configured (DL) reception on a symbol if/when the first SFI indicates the symbol as UL and frequency resource(s) of the configured reception is not within the first frequency resource(s). The UE cancels a configured (UL) transmission on a symbol if/when the first SFI indicates the symbol as DL and frequency resource(s) of the configured transmission is within the first frequency resource(s). The UE performs a configured (UL) transmission on a symbol if/when the first SFI indicates the symbol as DL and frequency resource(s) of the configured transmission is not within the first frequency resource(s). The UE does not expect to be scheduled (DL) reception on a symbol if/when the first SFI indicates the symbol as UL and frequency resource(s) of the scheduled reception is within the first frequency resource(s). The UE is scheduled (DL) reception on a symbol if/when the first SFI indicates the symbol as UL and frequency resource(s) of the configured reception is not within the first frequency resource(s). The UE does not expect to be scheduled (UL) transmission on a symbol if/when the first SFI indicates the symbol as DL and frequency resource(s) of the scheduled transmission is within the first frequency resource(s). The UE is scheduled (UL) transmission on a symbol if/when the first SFI indicates the symbol as DL and frequency resource(s) of the scheduled transmission is not within the first frequency resource(s). The UE receives indication of a second frequency resource(s). The UE receives a second SFI. The second frequency resource(s) is associated with the second SFI. The UE handles reception/transmission whose frequency resource(s) is within the second frequency resource(s) based on the second SFI. The UE cancels a configured (DL) reception on a symbol if/when the second SFI indicates the symbol as UL and frequency resource(s) of the configured reception is within the second frequency resource(s). The UE cancels a configured (UL) transmission on a symbol if/when the second SFI indicates the symbol as DL and frequency resource(s) of the configured transmission is within the second frequency resource(s). The UE does not expect to be scheduled (DL) reception on a symbol if/when the second SFI indicates the symbol as UL and frequency resource(s) of the scheduled transmission is within the second frequency resource(s). The UE does not expect to be scheduled (UL) transmission on a symbol if/when the second SFI indicates the symbol as DL and frequency resource(s) of the scheduled transmission is within the second frequency resource(s).

In another embodiment, a base station transmits indication of a first frequency resource(s) to a UE. The base station transmits a first SFI. The first frequency resource(s) is associated with the first SFI. The base station handles reception/transmission whose frequency resource(s) is within the first frequency resource(s) based on the first SFI. The base station does not handle reception/transmission whose frequency resource(s) is not within the first frequency resource(s) based on the first SFI. The base station handles reception/transmission whose frequency resource(s) is not within the first frequency resource(s) as if the first SFI is not indicated/present. The base station cancels a configured (DL) transmission on a symbol if/when the first SFI indicates the symbol as UL and frequency resource(s) of the configured transmission is within the first frequency resource(s). The base station performs a configured (DL) transmission on a symbol if/when the first SFI indicates the symbol as UL and frequency resource(s) of the configured transmission is not within the first frequency resource(s). The base station cancels a configured (UL) reception on a symbol if/when the first SFI indicates the symbol as DL and frequency resource(s) of the configured reception is within the first frequency resource(s). The base station performs a configured (UL) reception on a symbol if/when the first SFI indicates the symbol as DL and frequency resource(s) of the configured reception is not within the first frequency resource(s). The base station avoids scheduling (DL) transmission on a symbol if/when the first SFI indicates the symbol as UL and frequency resource(s) of the scheduled transmission is within the first frequency resource(s). The base station schedules (DL) transmission on a symbol if/when the first SFI indicates the symbol as UL and frequency resource(s) of the scheduled transmission is not within the first frequency resource(s). The base station avoids scheduling (UL) reception on a symbol if/when the first SFI indicates the symbol as DL and frequency resource(s) of the scheduled reception is within the first frequency resource(s). The base station schedules (UL) reception on a symbol if/when the first SFI indicates the symbol as DL and frequency resource(s) of the scheduled reception is not within the first frequency resource(s). The base station transmits indication of a second frequency resource(s) to the UE. The base station transmits a second SFI. The second frequency resource(s) is associated with the second SFI. The base station handles reception/transmission whose frequency resource(s) is within the second frequency resource(s) based on the second SFI. The base station cancels a configured (DL) transmission on a symbol if/when the second SFI indicates the symbol as UL and frequency resource(s) of the configured transmission is within the second frequency resource(s). The base station cancels a configured (UL) reception on a symbol if/when the second SFI indicates the symbol as DL and frequency resource(s) of the configured reception is within the second frequency resource(s). The base station avoids scheduling (DL) transmission on a symbol if/when the second SFI indicates the symbol as UL and frequency resource(s) of the scheduled transmission is within the second frequency resource(s). The base station avoids scheduling (UL) reception on a symbol if/when the second SFI indicates the symbol as DL and frequency resource(s) of the scheduled reception is within the second frequency resource(s).

In another embodiment, a UE receives indication of a first frequency resource(s) from a base station. The UE receives a first SFI. The first frequency resource(s) is not associated with the first SFI. The UE does not handle reception/transmission whose frequency resource(s) is within the first frequency resource(s) based on the first SFI. The UE handles reception/transmission whose frequency resource(s) is within the first frequency resource(s) as if the first SFI is not indicated/present. The UE handles reception/transmission whose frequency resource(s) is not within the first frequency resource(s) based on the first SFI. The UE cancels a configured (DL) reception on a symbol if/when the first SFI indicates the symbol as UL and frequency resource(s) of the configured reception is not within the first frequency resource(s). The UE performs a configured (DL) reception on a symbol if/when the first SFI indicates the symbol as UL and frequency resource(s) of the configured reception is within the first frequency resource(s). The UE cancels a configured (UL) transmission on a symbol if/when the first SFI indicates the symbol as DL and frequency resource(s) of the configured transmission is not within the first frequency resource(s). The UE performs a configured (UL) transmission on a symbol if/when the first SFI indicates the symbol as DL and frequency resource(s) of the configured reception is within the first frequency resource(s). The UE does not expect to be scheduled (DL) reception on a symbol if/when the first SFI indicates the symbol as UL and frequency resource(s) of the scheduled reception is not within the first frequency resource(s). The UE is scheduled (DL) reception on a symbol if/when the first SFI indicates the symbol as UL and frequency resource(s) of the scheduled reception is within the first frequency resource(s). The UE does not expect to be scheduled (UL) transmission on a symbol if/when the first SFI indicates the symbol as DL and frequency resource(s) of the scheduled transmission is not within the first frequency resource(s). The UE is scheduled (UL) transmission on a symbol if/when the first SFI indicates the symbol as DL and frequency resource(s) of the scheduled transmission is within the first frequency resource(s).

In another embodiment, a base station transmits indication of a first frequency resource(s) to a UE. The base station transmits a first SFI. The first frequency resource(s) is not associated with the first SFI. The base station does not handle reception/transmission whose frequency resource(s) is within the first frequency resource(s) based on the first SFI. The base station handles reception/transmission whose frequency resource(s) is within the first frequency resource(s) as if the first SFI is not indicated/present. The base station handles reception/transmission whose frequency resource(s) is not within the first frequency resource(s) based on the first SFI. The base station cancels a configured (DL) transmission on a symbol if/when the first SFI indicates the symbol as UL and frequency resource(s) of the configured transmission is not within the first frequency resource(s). The base station performs a configured (DL) transmission on a symbol if/when the first SFI indicates the symbol as UL and frequency resource(s) of the configured transmission is within the first frequency resource(s). The base station cancels a configured (UL) reception on a symbol if/when the first SFI indicates the symbol as DL and frequency resource(s) of the configured reception is not within the first frequency resource(s). The base station performs a configured (UL) reception on a symbol if/when the first SFI indicates the symbol as DL and frequency resource(s) of the configured reception is within the first frequency resource(s). The base station avoids scheduling (DL) transmission on a symbol if/when the first SFI indicates the symbol as UL and frequency resource(s) of the scheduled transmission is not within the first frequency resource(s). The base station schedules (DL) transmission on a symbol if/when the first SFI indicates the symbol as UL and frequency resource(s) of the scheduled transmission is within the first frequency resource(s). The base station avoids scheduling (UL) reception on a symbol if/when the first SFI indicates the symbol as DL and frequency resource(s) of the scheduled reception is not within the first frequency resource(s). The base station schedules (UL) reception on a symbol if/when the first SFI indicates the symbol as DL and frequency resource(s) of the scheduled reception is within the first frequency resource(s).

A collision handling rule (or a first/old collision handling rule or a first action related to collision handling) could be one or more of the following (e.g., the following refers to a behavior for "apply collision handling rule" or "collision rule is enabled" as described above /throughout the invention):

- If the UE is additionally provided *tdd-UL-DL-ConfigurationDedicated,* the parameter *tdd-UL-DL-ConfigurationDedicated* overrides only flexible symbols per slot over the number of slots as provided by *tdd-UL-DL-ConfigurationCommon.*

- For each slot having a corresponding index provided by *slotIndex,* the UE applies a format provided by corresponding *symbols.* The UE does not expect *tdd-UL-DL-ConfigurationDedicated* to indicate as uplink or as downlink a symbol that *tdd-UL-DL-ConfigurationCommon* indicates as a downlink or as an uplink symbol, respectively.

- A slot configuration period and a number of downlink symbols, uplink symbols, and flexible symbols in each slot of the slot configuration period are determined from *tdd-UL-DL-ConfigurationCommon* and *tdd-UL-DL-ConfigurationDedicated* and are common to each configured BWP.

- A UE considers symbols in a slot indicated as downlink by *tdd-UL-DL-ConfigurationCommon,* or *tdd-UL-DL-ConfigurationDedicated* to be available for receptions and considers symbols in a slot indicated as uplink by *tdd-UL-DL-ConfigurationCommon,* or by *tdd-UL-DL-ConfigurationDedicated* to be available for transmissions.

- If a UE is not configured to monitor Physical Downlink Control Channel (PDCCH) for DCI format 2_0, for a set of symbols of a slot that are indicated as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, the UE receives Physical Downlink Shared Channel (PDSCH) or Channel State Information Reference Signal (CSI-RS) in the set of symbols of the slot if the UE receives a corresponding indication by a DCI format.

- If a UE is not configured to monitor PDCCH for DCI format 2_0, for a set of symbols of a slot that are indicated as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, the UE transmits Physical Uplink Shared Channel (PUSCH), Physical Uplink Control Channel (PUCCH), Physical Random Access Channel (PRACH), or Sounding Reference Signal (SRS) in the set of symbols of the slot if the UE receives a corresponding indication by a DCI format, a Random Access Response (RAR) UL grant, fallbackRAR UL grant, or successRAR.

- For operation on a single carrier in unpaired spectrum, if a UE is configured by higher layers to receive a PDCCH, or a PDSCH, or a CSI-RS, or a DL Positioning Reference Signal (PRS) in a set of symbols of a slot, the UE receives the PDCCH, the PDSCH, the CSI-RS, or the DL PRS if the UE does not detect a DCI format that indicates to the UE to transmit a PUSCH, a PUCCH, a PRACH, or a SRS in at least one symbol of the set of symbols of the slot; otherwise, the UE does not receive the PDCCH, or the PDSCH, or the CSI-RS, or the DL PRS in the set of symbols of the slot.

- For operation on a single carrier in unpaired spectrum, if a UE is configured by higher layers to transmit SRS, or PUCCH, or PUSCH, or PRACH in a set of symbols of a slot and the UE detects a DCI format indicating to the UE to receive CSI-RS or PDSCH in a subset of symbols from the set of symbols then: if the UE does not indicate the capability of [partialCancellation], the UE does not expect to cancel the transmission of the PUCCH or PUSCH or PRACH in the set of symbols if the first symbol in the set occurs within $T_{(proc,2)}$ relative to a last symbol of a Control Resource Set (CORESET) where the UE detects the DCI format; otherwise, the UE cancels the PUCCH, or the PUSCH, or an actual repetition of the PUSCH [6, TS38.214], determined from clauses 9 and 9.2.5 or clause 6.1 of [6, TS38.214], or the PRACH transmission in the set of symbols.

- For operation on a single carrier in unpaired spectrum, if a UE is configured by higher layers to transmit SRS, or PUCCH, or PUSCH, or PRACH in a set of symbols of a slot and the UE detects a DCI format indicating to the UE to receive CSI-RS or PDSCH in a subset of symbols from the set of symbols, then: if the UE indicates the capability of [partialCancellation], the UE does not expect to cancel the transmission of the PUCCH or PUSCH or PRACH in symbols from the set of symbols that occur within $T_{proc,2}$ relative to a last symbol of a CORESET where the UE detects the DCI format. The UE cancels the PUCCH, or the PUSCH, or an actual repetition of the PUSCH [6, TS 38.214], determined from clauses 9 and 9.2.5 or clause 6.1 of [6, TS 38.214], or the PRACH transmission in remaining symbols from the set of symbols.

- For operation on a single carrier in unpaired spectrum, if a UE is configured by higher layers to transmit SRS, or PUCCH, or PUSCH, or PRACH in a set of symbols of a slot and the UE detects a DCI format indicating to the UE to receive CSI-RS or PDSCH in a subset of symbols from the set of symbols, then: the UE does not expect to cancel the transmission of SRS in symbols from the subset of symbols that occur within T_(proc,2) relative to a last symbol of a CORESET where the UE detects the DCI format. The UE cancels the SRS transmission in remaining symbols from the subset of symbols.

- For a set of symbols of a slot that are indicated to a UE as uplink by *tdd-UL-DL-ConfigurationCommon* the UE does not receive PDCCH, PDSCH, or CSI-RS when the PDCCH, PDSCH, or CSI-RS overlaps, even partially, with the set of symbols of the slot.

- For a set of symbols of a slot that are indicated to a UE as uplink by *tdd-UL-DL-ConfigurationDedicated,* the UE does not receive PDCCH, PDSCH, or CSI-RS when the PDCCH, PDSCH, or CSI-RS overlaps, even partially, with the set of symbols of the slot.

- For a set of symbols of a slot that are indicated to a UE as uplink by *tdd-UL-DL-ConfigurationCommon,* the UE does not receive DL PRS in the set of symbols of the slot, if the UE is not provided with a measurement gap.

- For a set of symbols of a slot that are indicated to a UE as uplink by *tdd-UL-DL-ConfigurationDedicated,* the UE does not receive DL PRS in the set of symbols of the slot, if the UE is not provided with a measurement gap.

- For a set of symbols of a slot that are indicated to a UE as downlink by *tdd-UL-DL-ConfigurationCommon,* the UE does not transmit PUSCH, PUCCH, PRACH, or SRS when the PUSCH, PUCCH, PRACH, or SRS overlaps, even partially, with the set of symbols of the slot.

- For a set of symbols of a slot that are indicated to a UE as downlink by *tdd-UL-DL-ConfigurationDedicated,* the UE does not transmit PUSCH, PUCCH, PRACH, or SRS when the PUSCH, PUCCH, PRACH, or SRS overlaps, even partially, with the set of symbols of the slot.

- For a set of symbols of a slot that are indicated to a UE as flexible by *tdd-UL-DL-ConfigurationCommon,* and *tdd-UL-DL-ConfigurationDedicated* if provided, the UE does not expect to receive both dedicated higher layer parameters configuring transmission from the UE in the set of symbols of the slot and dedicated higher layer parameters configuring reception by the UE in the set of symbols of the slot.

- For operation on a single carrier in unpaired spectrum, for a set of symbols of a slot indicated to a UE by *ssb-PositionsInBurst* in *SIB1* or *ssb-PositionsInBurst* in *ServingCellConfigCommon,* for reception of Synchronization Signal Block (SS)/Physical Broadcast Channel (PBCH) blocks, the UE does not transmit PUSCH, PUCCH, PRACH in the slot if a transmission would overlap with any symbol from the set of symbols and the UE does not transmit SRS in the set of symbols of the slot. The UE does not expect the set of symbols of the slot to be indicated as uplink by *tdd-UL-DL-ConfigurationCommon,* or *tdd-UL-DL-ConfigurationDedicated,* when provided to the UE.

- For a set of symbols of a slot corresponding to a valid PRACH occasion and $N_{gap}$ symbols before the valid PRACH occasion, as described in clause 8.1, the UE does not receive PDCCH, PDSCH, or CSI-RS in the slot if a reception would overlap with any symbol from the set of symbols. The UE does not expect the set of symbols of the slot to be indicated as downlink by *tdd-UL-DL-ConfigurationCommon* or *tdd-UL-DL-ConfigurationDedicated.*

- For a set of symbols of a slot indicated to a UE by *pdcch-ConfigSIBI* in Master Information Block *(MIB)* for a CORESET for TypeO-PDCCH Common Search Space (CSS) set, the UE does not expect the set of symbols to be indicated as uplink by *tdd-UL-DL-ConfigurationCommon,* or *tdd-UL-DL-ConfigurationDedicated.*

- If a UE is scheduled by a DCI format to receive PDSCH over multiple slots, and if *tdd-UL-DL-ConfigurationCommon* indicates that, for a slot from the multiple slots, at least one symbol from a set of symbols where the UE is scheduled PDSCH reception in the slot is an uplink symbol, the UE does not receive the PDSCH in the slot.

- If a UE is scheduled by a DCI format to receive PDSCH over multiple slots, and if *tdd-UL-DL-ConfigurationDedicated* indicates that, for a slot from the multiple slots, at least one symbol from a set of symbols where the UE is scheduled PDSCH reception in the slot is an uplink symbol, the UE does not receive the PDSCH in the slot.

- If a UE is scheduled by a DCI format to transmit PUSCH over multiple slots, and if *tdd-UL-DL-ConfigurationCommon* indicates that, for a slot from the multiple slots, at least one symbol from a set of symbols where the UE is scheduled PUSCH transmission in the slot is a downlink symbol, the UE does not transmit the PUSCH in the slot.

- If a UE is scheduled by a DCI format to transmit PUSCH over multiple slots, and if *tdd-UL-DL-ConfigurationDedicated* indicates that, for a slot from the multiple slots, at least one symbol from a set of symbols where the UE is scheduled PUSCH transmission in the slot is a downlink symbol, the UE does not transmit the PUSCH in the slot.

- For a set of symbols of a slot, a UE does not expect to detect a DCI format 2_0 with an SFI-index field value indicating the set of symbols of the slot as uplink and to detect a DCI format indicating to the UE to receive PDSCH or CSI-RS in the set of symbols of the slot.

- For a set of symbols of a slot, a UE does not expect to detect a DCI format 2_0 with an SFI-index field value indicating the set of symbols in the slot as downlink and to detect a DCI format, a RAR UL grant, fallbackRAR UL grant, or successRAR indicating to the UE to transmit PUSCH, PUCCH, PRACH, or SRS in the set of symbols of the slot.

- For a set of symbols of a slot that are indicated as downlink/uplink by *tdd-UL-DL-ConfigurationCommon,* or *tdd-UL-DL-ConfigurationDedicated,* the UE does not expect to detect a DCI format 2_0 with an SFI-index field value indicating the set of symbols of the slot as uplink/downlink, respectively, or as flexible.

- For a set of symbols of a slot corresponding to SS/PBCH blocks with candidate SS/PBCH block indices corresponding to the SS/PBCH block indexes indicated to a UE by *ssb-PositionsInBurst* in *SIB1,* or by *ssb-PositionsInBurst* in *ServingCellConfigCommon,* as described in clause 4.1 above ([1] 3GPP TS 38.211 V15.7.0), the UE does not expect to detect a DCI format 2_0 with an SFI-index field value indicating the set of symbols of the slot as uplink.

- For a set of symbols of a slot corresponding to a valid PRACH occasion and $N_{gap}$ symbols before the valid PRACH occasion, as described in clause 8.1, the UE does not expect to detect a DCI format 2_0 with an SFI-index field value indicating the set of symbols of the slot as downlink.

- For a set of symbols of a slot indicated to a UE by *pdcch-ConfigSIB1 in MIB* for a CORESET for TypeO-PDCCH CSS set, the UE does not expect to detect a DCI format 2_0 with an SFI-index field value indicating the set of symbols of the slot as uplink.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if one or more symbols from the set of symbols are symbols in a CORESET configured to the UE for PDCCH monitoring, the UE receives PDCCH in the CORESET only if an SFI-index field value in DCI format 2_0 indicates that the one or more symbols are downlink symbols.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if an SFI-index field value in DCI format 2_0 indicates the set of symbols of the slot as flexible and the UE detects a DCI format indicating to the UE to receive PDSCH or CSI-RS in the set of symbols of the slot, the UE receives PDSCH or CSI-RS in the set of symbols of the slot.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if an SFI-index field value in DCI format 2_0 indicates the set of symbols of the slot as flexible and the UE detects a DCI format, a RAR UL grant, fallbackRAR UL grant, or successRAR indicating to the UE to transmit PUSCH, PUCCH, PRACH, or SRS in the set of symbols of the slot the UE transmits the PUSCH, PUCCH, PRACH, or SRS in the set of symbols of the slot.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if an SFI-index field value in DCI format 2_0 indicates the set of symbols of the slot as flexible, and the UE does not detect a DCI format indicating to the UE to receive PDSCH or CSI-RS, or the UE does not detect a DCI format, a RAR UL, fallbackRAR UL grant, or successRAR grant indicating to the UE to transmit PUSCH, PUCCH, PRACH, or SRS in the set of symbols of the slot, the UE does not transmit or receive in the set of symbols of the slot.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if the UE is configured by higher layers to receive DL PRS in the set of symbols of the slot, the UE receives the DL PRS in the set of symbols of the slot only if an SFI-index field value in DCI format 2_0 indicates the set of symbols of the slot as downlink or flexible.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if the UE is configured by higher layers to transmit PUCCH, or PUSCH, or PRACH in the set of symbols of the slot, the UE transmits the PUCCH, or the PUSCH, or the PRACH in the slot only if an SFI-index field value in DCI format 2_0 indicates the set of symbols of the slot as uplink.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if the UE is configured by higher layers to transmit SRS in the set of symbols of the slot, the UE transmits the SRS only in a subset of symbols from the set of symbols of the slot indicated as uplink symbols by an SFI-index field value in DCI format 2_0.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: a UE does not expect to detect an SFI-index field value in DCI format 2_0 indicating the set of symbols of the slot as downlink and also detect a DCI format, a RAR UL grant, fallbackRAR UL grant, or successRAR indicating to the UE to transmit SRS, PUSCH, PUCCH, or PRACH, in one or more symbols from the set of symbols of the slot.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: a UE does not expect to detect an SFI-index field value in DCI format 2_0 indicating the set of symbols of the slot as downlink or flexible if the set of symbols of the slot includes symbols corresponding to any repetition of a PUSCH transmission activated by an UL Type 2 grant PDCCH.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: a UE does not expect to detect an SFI-index field value in DCI format 2_0 indicating the set of symbols of the slot as uplink and also detect a DCI format indicating to the UE to receive PDSCH or CSI-RS in one or more symbols from the set of symbols of the slot.

- If a UE is configured by higher layers to receive a CSI-RS or a PDSCH in a set of symbols of a slot and the UE detects a DCI format 2_0 with a slot format value other than 255 that indicates a slot format with a subset of symbols from the set of symbols as uplink or flexible, or the UE detects a DCI format indicating to the UE to transmit PUSCH, PUCCH, SRS, or PRACH in at least one symbol in the set of the symbols, the UE cancels the CSI-RS reception in the set of symbols of the slot or cancels the PDSCH reception in the slot.

- If a UE is configured by higher layers to receive a DL PRS in a set of symbols of a slot and the UE detects a DCI format 2_0 with a slot format value other than 255 that indicates a slot format with a subset of symbols from the set of symbols as uplink, or the UE detects a DCI format indicating to the UE to transmit PUSCH, PUCCH, SRS, or PRACH in at least one symbol in the set of the symbols, the UE cancels the DL PRS reception in the set of symbols of the slot.

- If a UE is configured by higher layers to transmit SRS, or PUCCH, or PUSCH, or PRACH in a set of symbols of a slot and the UE detects a DCI format 2_0 with a slot format value other than 255 that indicates a slot format with a subset of symbols from the set of symbols as downlink or flexible, or the UE detects a DCI format indicating to the UE to receive CSI-RS or PDSCH in a subset of symbols from the set of symbols, then: if the UE does not indicate the capability of [partialCancellation], the UE does not expect to cancel the transmission of the PUCCH or PUSCH or PRACH in the set of symbols if the first symbol in the set occurs within $T_{proc,2}$ relative to a last symbol of a CORESET where the UE detects the DCI format; otherwise, the UE cancels the PUCCH, or the PUSCH, or an actual repetition of the PUSCH [6, TS38.214], determined from clauses 9 and 9.2.5 or clause 6.1 of [6, TS 38.214], or the PRACH transmission in the set of symbols.

- If a UE is configured by higher layers to transmit SRS, or PUCCH, or PUSCH, or PRACH in a set of symbols of a slot and the UE detects a DCI format 2_0 with a slot format value other than 255 that indicates a slot format with a subset of symbols from the set of symbols as downlink or flexible, or the UE detects a DCI format indicating to the UE to receive CSI-RS or PDSCH in a subset of symbols from the set of symbols, then: if the UE indicates the capability of [partialCancellation], the UE does not expect to cancel the transmission of the PUCCH or PUSCH or PRACH in symbols from the set of symbols that occur within $T_{proc,2}$ relative to a last symbol of a CORESET where the UE detects the DCI format. The UE cancels the PUCCH, or the PUSCH, or an actual repetition of the PUSCH [6, TS 38.214], determined from clauses 9 and 9.2.5 or clause 6.1 of [6, TS 38.214], or the PRACH transmission in remaining symbols from the set of symbols.

- If a UE is configured by higher layers to transmit SRS, or PUCCH, or PUSCH, or PRACH in a set of symbols of a slot and the UE detects a DCI format 2_0 with a slot format value other than 255 that indicates a slot format with a subset of symbols from the set of symbols as downlink or flexible, or the UE detects a DCI format indicating to the UE to receive CSI-RS or PDSCH in a subset of symbols from the set of symbols, then: the UE does not expect to cancel the transmission of SRS in symbols from the subset of symbols that occur within $T_{(proc,2)}$ relative to a last symbol of a CORESET where the UE detects the DCI format. The UE cancels the SRS transmission in remaining symbols from the subset of symbols.

- A UE assumes that flexible symbols in a CORESET configured to the UE for PDCCH monitoring are downlink symbols if the UE does not detect an SFI-index field value in DCI format 2_0 indicating the set of symbols of the slot as flexible or uplink and the UE does not detect a DCI format indicating to the UE to transmit SRS, PUSCH, PUCCH, or PRACH in the set of symbols.

- For a set of symbols of a slot that are indicated as flexible by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: the UE receives PDSCH or CSI-RS in the set of symbols of the slot if the UE receives a corresponding indication by a DCI format.
- For a set of symbols of a slot that are indicated as flexible by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: the UE transmits PUSCH, PUCCH, PRACH, or SRS in the set of symbols of the slot if the UE receives a corresponding indication by a DCI format, a RAR UL grant, fallbackRAR UL grant, or successRAR.
- For a set of symbols of a slot that are indicated as flexible by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: the UE receives PDCCH as described in clause 10.1.
- For a set of symbols of a slot that are indicated as flexible by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: if the UE is configured by higher layers to receive PDSCH in the set of symbols of the slot, the UE does not receive the PDSCH in the set of symbols of the slot.
- For a set of symbols of a slot that are indicated as flexible by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: if the UE is configured by higher layers to receive DL PRS in the set of symbols of the slot, the UE receives the DL PRS.
- For a set of symbols of a slot that are indicated as flexible by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: if the UE is configured by higher layers to transmit SRS, or PUCCH, or PUSCH, or PRACH in the set of symbols of the slot and the UE is not provided enableConfiguredUL, then: the UE does not expect to cancel the transmission of SRS in symbols from the set of symbols that occur within $T\_{(proc,2)}$ relative to a last symbol of a CORESET where the UE is configured to monitor PDCCH for DCI format 2_0. The UE cancels the SRS transmission in remaining symbols from the set of symbols.
- For a set of symbols of a slot that are indicated as flexible by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: if the UE is configured by higher layers to transmit SRS, or PUCCH, or PUSCH, or PRACH in the set of symbols of the slot and the UE is provided *enableConfiguredUL,* the UE can transmit the SRS, or PUCCH, or PUSCH, or PRACH, respectively.

An exception/exemption of collision handling rule (or a new/second collision handling rule or a second action related to collision handling) could be one or more of the following (e.g., the following refers to a behavior of "not apply collision handling rule" or "collision rule is disabled" as described above and throughout the invention):

- If the UE is additionally provided *tdd-UL-DL-ConfigurationDedicated,* the parameter *tdd-UL-DL-ConfigurationDedicated* overrides DL symbols per slot over the number of slots as provided by *tdd-UL-DL-ConfigurationCommon.*
- If the UE is additionally provided *tdd-UL-DL-ConfigurationDedicated,* the parameter *tdd-UL-DL-ConfigurationDedicated* overrides UL symbols per slot over the number of slots as provided by *tdd-UL-DL-ConfigurationCommon.*
- For each slot having a corresponding index provided by *slotIndex,* the UE applies a format provided by corresponding *symbols.* The UE receives *tdd-UL-DL-ConfigurationDedicated* to indicate as uplink symbol that *tdd-UL-DL-ConfigurationCommon* indicates as a downlink symbol.
- For each slot having a corresponding index provided by *slotIndex,* the UE applies a format provided by corresponding *symbols.* The UE receives *tdd-UL-DL-ConfigurationDedicated* to indicate as downlink symbol that *tdd-UL-DL-ConfigurationCommon* indicates as an uplink symbol.
- A slot configuration period and a number of downlink symbols, uplink symbols, and flexible symbols in each slot of the slot configuration period are determined from *tdd-UL-DL-ConfigurationCommon* and *tdd-UL-DL-ConfigurationDedicated* and are different to different configured BWPs (i.e., each BWP has its own slot configuration).
- A UE considers symbols in a slot indicated as uplink by *tdd-UL-DL-ConfigurationCommon,* or *tdd-UL-DL-ConfigurationDedicated* to be available for receptions.

- A UE considers symbols in a slot indicated as downlink by *tdd-UL-DL-ConfigurationCommon,* or by *tdd-UL-DL-ConfigurationDedicated* to be available for transmissions.

- If a UE is not configured to monitor PDCCH for DCI format 2_0, for a set of symbols of a slot that are indicated as uplink by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, the UE receives PDSCH or CSI-RS in the set of symbols of the slot if the UE receives a corresponding indication by a DCI format.

- If a UE is not configured to monitor PDCCH for DCI format 2_0, for a set of symbols of a slot that are indicated as downlink by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, the UE transmits PUSCH, PUCCH, PRACH, or SRS in the set of symbols of the slot if the UE receives a corresponding indication by a DCI format, a RAR UL grant, fallbackRAR UL grant, or successRAR.

- For operation on a single carrier in unpaired spectrum, if a UE is configured by higher layers to receive a PDCCH, or a PDSCH, or a CSI-RS, or a DL PRS in a set of symbols of a slot, the UE receives the PDCCH, the PDSCH, the CSI-RS, or the DL PRS if the UE detects a DCI format that indicates to the UE to transmit a PUSCH, a PUCCH, a PRACH, or a SRS in at least one symbol of the set of symbols of the slot.

- For operation on a single carrier in unpaired spectrum, if a UE is configured by higher layers to transmit SRS, or PUCCH, or PUSCH, or PRACH in a set of symbols of a slot and the UE detects a DCI format indicating to the UE to receive CSI-RS or PDSCH in a subset of symbols from the set of symbols then: if the UE does not indicate the capability of [partialCancellation], the UE transmits the PUCCH, or the PUSCH, or an actual repetition of the PUSCH [6, TS38.214], determined from clauses 9 and 9.2.5 or clause 6.1 of [6, TS38.214], or the PRACH transmission in the set of symbols.

- For operation on a single carrier in unpaired spectrum, if a UE is configured by higher layers to transmit SRS, or PUCCH, or PUSCH, or PRACH in a set of symbols of a slot and the UE detects a DCI format indicating to the UE to receive CSI-RS or PDSCH in a subset of symbols from the set of symbols, then: if the UE indicates the capability of [partialCancellation], the UE transmits the PUCCH, or the PUSCH, or an actual repetition of the PUSCH [6, TS38.214], determined from clauses 9 and 9.2.5 or clause 6.1 of [6, TS38.214], or the PRACH transmission in the set of symbols.

- For operation on a single carrier in unpaired spectrum, if a UE is configured by higher layers to transmit SRS, or PUCCH, or PUSCH, or PRACH in a set of symbols of a slot and the UE detects a DCI format indicating to the UE to receive CSI-RS or PDSCH in a subset of symbols from the set of symbols then: the UE transmit SRS in the subset of symbols.

- For a set of symbols of a slot that are indicated to a UE as uplink by *tdd-UL-DL-ConfigurationCommon* the UE receives PDCCH, PDSCH, or CSI-RS when the PDCCH, PDSCH, or CSI-RS overlaps, even partially, with the set of symbols of the slot.

- For a set of symbols of a slot that are indicated to a UE as uplink by *tdd-UL-DL-ConfigurationDedicated,* the UE receives PDCCH, PDSCH, or CSI-RS when the PDCCH, PDSCH, or CSI-RS overlaps, even partially, with the set of symbols of the slot.

- For a set of symbols of a slot that are indicated to a UE as uplink by *tdd-UL-DL-ConfigurationCommon,* the UE receives DL PRS in the set of symbols of the slot, if the UE is not provided with a measurement gap.

- For a set of symbols of a slot that are indicated to a UE as uplink by *tdd-UL-DL-ConfigurationDedicated,* the UE receives DL PRS in the set of symbols of the slot, if the UE is not provided with a measurement gap.

- For a set of symbols of a slot that are indicated to a UE as downlink by *tdd-UL-DL-ConfigurationCommon,* the UE transmits PUSCH, PUCCH, PRACH, or SRS when the PUSCH, PUCCH, PRACH, or SRS overlaps, even partially, with the set of symbols of the slot.

- For a set of symbols of a slot that are indicated to a UE as downlink by *tdd-UL-DL-ConfigurationDedicated,* the UE transmits PUSCH, PUCCH, PRACH, or SRS when the PUSCH, PUCCH, PRACH, or SRS overlaps, even partially, with the set of symbols of the slot.

- For a set of symbols of a slot that are indicated to a UE as flexible by *tdd-UL-DL-ConfigurationCommon,* and *tdd-UL-DL-ConfigurationDedicated* if provided, the UE receives both dedicated higher layer parameters configuring transmission from the UE in the set of symbols of the slot and dedicated higher layer parameters configuring reception by the UE in the set of symbols of the slot.

- For operation on a single carrier in unpaired spectrum, for a set of symbols of a slot indicated to a UE by *ssb-PositionsInBurst* in *SIB1* or *ssb-PositionsInBurst* in *ServingCellConfigCommon,* for reception of SS/PBCH blocks, the UE transmits PUSCH, PUCCH, PRACH in the slot if a transmission would overlap with any symbol from the set of symbols and the UE transmits SRS in the set of symbols of the slot. The set of symbols of the slot is indicated as uplink by *tdd-UL-DL-ConfigurationCommon,* or *tdd-UL-DL-ConfigurationDedicated,* when provided to the UE.

- For a set of symbols of a slot corresponding to a valid PRACH occasion and $N_{gap}$ symbols before the valid PRACH occasion, as described in clause 8.1, the UE receives PDCCH, PDSCH, or CSI-RS in the slot if a reception would overlap with any symbol from the set of symbols. The set of symbols of the slot is indicated as downlink by *tdd-UL-DL-ConfigurationCommon* or *tdd-UL-DL-ConfigurationDedicated.*

- For a set of symbols of a slot indicated to a UE by *pdcch-ConfigSIB1* in *MIB* for a CORESET for TypeO-PDCCH CSS set, the set of symbols is indicated as uplink by *tdd-UL-DL-ConfigurationCommon,* or *tdd-UL-DL-ConfigurationDedicated.*

- If a UE is scheduled by a DCI format to receive PDSCH over multiple slots, and if *tdd-UL-DL-ConfigurationCommon* indicate that, for a slot from the multiple slots, at least one symbol from a set of symbols where the UE is scheduled PDSCH reception in the slot is an uplink symbol, the UE receives the PDSCH in the slot.

- If a UE is scheduled by a DCI format to receive PDSCH over multiple slots, and if *tdd-UL-DL-ConfigurationDedicated,* indicate that, for a slot from the multiple slots, at least one symbol from a set of symbols where the UE is scheduled PDSCH reception in the slot is an uplink symbol, the UE receives the PDSCH in the slot.

- If a UE is scheduled by a DCI format to transmit PUSCH over multiple slots, and if *tdd-UL-DL-ConfigurationCommon,* indicates that, for a slot from the multiple slots, at least one symbol from a set of symbols where the UE is scheduled PUSCH transmission in the slot is a downlink symbol, the UE transmits the PUSCH in the slot.

- If a UE is scheduled by a DCI format to transmit PUSCH over multiple slots, and if *tdd-UL-DL-ConfigurationDedicated,* indicates that, for a slot from the multiple slots, at least one symbol from a set of symbols where the UE is scheduled PUSCH transmission in the slot is a downlink symbol, the UE transmits the PUSCH in the slot.

- For a set of symbols of a slot, a UE detects a DCI format 2_0 with an SFI-index field value indicating the set of symbols of the slot as uplink and detects a DCI format indicating to the UE to receive PDSCH or CSI-RS in the set of symbols of the slot.

- For a set of symbols of a slot, a UE detects a DCI format 2_0 with an SFI-index field value indicating the set of symbols in the slot as downlink and detects a DCI format, a RAR UL grant, fallbackRAR UL grant, or successRAR indicating to the UE to transmit PUSCH, PUCCH, PRACH, or SRS in the set of symbols of the slot.

- For a set of symbols of a slot that are indicated as downlink by *tdd-UL-DL-ConfigurationCommon,* the UE does not expect to detect a DCI format 2_0 with an SFI-index field value indicating the set of symbols of the slot as uplink, respectively, or as flexible.

- For a set of symbols of a slot that are indicated as downlink by *tdd-UL-DL-ConfigurationDedicated,* the UE does not expect to detect a DCI format 2_0 with an SFI-index field value indicating the set of symbols of the slot as uplink, respectively, or as flexible.

- For a set of symbols of a slot that are indicated as uplink by *tdd-UL-DL-ConfigurationCommon,* the UE does not expect to detect a DCI format 2_0 with an SFI-index field value indicating the set of symbols of the slot as downlink, respectively, or as flexible.

- For a set of symbols of a slot that are indicated as uplink by *tdd-UL-DL-ConfigurationDedicated,* the UE does not expect to detect a DCI format 2_0 with an SFI-index field value indicating the set of symbols of the slot as downlink, respectively, or as flexible.

- For a set of symbols of a slot corresponding to SS/PBCH blocks with candidate SS/PBCH block indices corresponding to the SS/PBCH block indexes indicated to a UE by *ssb-PositionsInBurst* in *SIB1,* or by *ssb-PositionsInBurst* in *ServingCellConfigCommon,* as described in clause 4.1 above ([1] 3GPP TS 38.211 V15.7.0), the UE detects a DCI format 2_0 with an SFI-index field value indicating the set of symbols of the slot as uplink.

- For a set of symbols of a slot corresponding to a valid PRACH occasion and $N_{gap}$ symbols before the valid PRACH occasion, as described in clause 8.1, the UE detects a DCI format 2_0 with an SFI-index field value indicating the set of symbols of the slot as downlink.

- For a set of symbols of a slot indicated to a UE by *pdcch-ConfigSIBl in MIB* for a CORESET for TypeO-PDCCH CSS set, the UE detects a DCI format 2_0 with an SFI-index field value indicating the set of symbols of the slot as uplink.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if one or more symbols from the set of symbols are symbols in a CORESET configured to the UE for PDCCH monitoring, the UE receives PDCCH in the CORESET if an SFI-index field value in DCI format 2_0 indicates that the one or more symbols are flexible symbols.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if one or more symbols from the set of symbols are symbols in a CORESET configured to the UE for PDCCH monitoring, the UE receives PDCCH in the CORESET if an SFI-index field value in DCI format 2_0 indicates that the one or more symbols are uplink symbols.

- For a set of symbols of a slot indicated to a UE as flexible by *tdd-UL-DL-ConfigurationCommon* and *tdd-UL-DL-*

*ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if an SFI-index field value in DCI format 2_0 indicates the set of symbols of the slot as uplink and the UE detects a DCI format indicating to the UE to receive PDSCH or CSI-RS in the set of symbols of the slot, the UE receives PDSCH or CSI-RS in the set of symbols of the slot.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if an SFI-index field value in DCI format 2_0 indicates the set of symbols of the slot as downlink and the UE detects a DCI format, a RAR UL grant, fallbackRAR UL grant, or successRAR indicating to the UE to transmit PUSCH, PUCCH, PRACH, or SRS in the set of symbols of the slot the UE transmits the PUSCH, PUCCH, PRACH, or SRS in the set of symbols of the slot.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if an SFI-index field value in DCI format 2_0 indicates the set of symbols of the slot as flexible, and the UE detects a DCI format indicating to the UE to receive PDSCH or CSI-RS, and the UE detects a DCI format, a RAR UL, fallbackRAR UL grant, or successRAR grant indicating to the UE to transmit PUSCH, PUCCH, PRACH, or SRS in the set of symbols of the slot, the UE transmits and receives in the set of symbols of the slot.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if the UE is configured by higher layers to receive DL PRS in the set of symbols of the slot, the UE receives the DL PRS in the set of symbols of the slot if an SFI-index field value in DCI format 2_0 indicates the set of symbols of the slot as uplink.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if the UE is configured by higher layers to transmit PUCCH, or PUSCH, or PRACH in the set of symbols of the slot, the UE transmits the PUCCH, or the PUSCH, or the PRACH in the slot if an SFI-index field value in DCI format 2_0 indicates the set of symbols of the slot as flexible.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if the UE is configured by higher layers to transmit PUCCH, or PUSCH, or PRACH in the set of symbols of the slot, the UE transmits the PUCCH, or the PUSCH, or the PRACH in the slot if an SFI-index field value in DCI format 2_0 indicates the set of symbols of the slot as downlink.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if the UE is configured by higher layers to transmit SRS in the set of symbols of the slot, the UE transmits the SRS in the set of symbols of the slot indicated as flexible symbols by an SFI-index field value in DCI format 2_0.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: if the UE is configured by higher layers to transmit SRS in the set of symbols of the slot, the UE transmits the SRS in the set of symbols of the slot indicated as downlink symbols by an SFI-index field value in DCI format 2_0.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: a UE detects an SFI-index field value in DCI format 2_0 indicating the set of symbols of the slot as downlink and also detect a DCI format, a RAR UL grant, fallbackRAR UL grant, or successRAR indicating to the UE to transmit SRS, PUSCH, PUCCH, or PRACH, in one or more symbols from the set of symbols of the slot.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedi-*

*cated* are not provided to the UE, and if the UE detects a DCI format 2_0 providing a format for the slot using a slot format value other than 255: a UE detects an SFI-index field value in DCI format 2_0 indicating the set of symbols of the slot as downlink or flexible if the set of symbols of the slot includes symbols corresponding to any repetition of a PUSCH transmission activated by an UL Type 2 grant PDCCH.

- For a set of symbols of a slot indicated to a UE as flexible by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, and if the UE detects a DCI format 2_0 providing a format for the slot using a slot format value other than 255: a UE detects an SFI-index field value in DCI format 2_0 indicating the set of symbols of the slot as uplink and also detect a DCI format indicating to the UE to receive PDSCH or CSI-RS in one or more symbols from the set of symbols of the slot.

- If a UE is configured by higher layers to receive a CSI-RS or a PDSCH in a set of symbols of a slot and the UE detects a DCI format 2_0 with a slot format value other than 255 that indicates a slot format with a subset of symbols from the set of symbols as uplink or flexible, or the UE detects a DCI format indicating to the UE to transmit PUSCH, PUCCH, SRS, or PRACH in at least one symbol in the set of the symbols, the UE performs the CSI-RS reception in the set of symbols of the slot or performs the PDSCH reception in the slot.

- If a UE is configured by higher layers to receive a DL PRS in a set of symbols of a slot and the UE detects a DCI format 2_0 with a slot format value other than 255 that indicates a slot format with a subset of symbols from the set of symbols as uplink, or the UE detects a DCI format indicating to the UE to transmit PUSCH, PUCCH, SRS, or PRACH in at least one symbol in the set of the symbols, the UE performs the DL PRS reception in the set of symbols of the slot.

- If a UE is configured by higher layers to transmit SRS, or PUCCH, or PUSCH, or PRACH in a set of symbols of a slot and the UE detects a DCI format 2_0 with a slot format value other than 255 that indicates a slot format with a subset of symbols from the set of symbols as downlink or flexible, or the UE detects a DCI format indicating to the UE to receive CSI-RS or PDSCH in a subset of symbols from the set of symbols, then: if the UE does not indicate the capability of [partialCancellation], the UE performs the transmission of the PUCCH or PUSCH or PRACH in the set of symbols.

- If a UE is configured by higher layers to transmit SRS, or PUCCH, or PUSCH, or PRACH in a set of symbols of a slot and the UE detects a DCI format 2_0 with a slot format value other than 255 that indicates a slot format with a subset of symbols from the set of symbols as downlink or flexible, or the UE detects a DCI format indicating to the UE to receive CSI-RS or PDSCH in a subset of symbols from the set of symbols, then: if the UE indicates the capability of [partialCancellation], the UE performs transmission of the PUCCH or PUSCH or PRACH in the set of symbols.

- If a UE is configured by higher layers to transmit SRS, or PUCCH, or PUSCH, or PRACH in a set of symbols of a slot and the UE detects a DCI format 2_0 with a slot format value other than 255 that indicates a slot format with a subset of symbols from the set of symbols as downlink or flexible, or the UE detects a DCI format indicating to the UE to receive CSI-RS or PDSCH in a subset of symbols from the set of symbols, then: the UE performs the transmission of SRS in the subset of symbols.

- A UE assumes that flexible symbols in a CORESET configured to the UE for PDCCH monitoring are downlink symbols if the UE detects an SFI-index field value in DCI format 2_0 indicating the set of symbols of the slot as flexible or uplink and the UE does not detect a DCI format indicating to the UE to transmit SRS, PUSCH, PUCCH, or PRACH in the set of symbols.

- For a set of symbols of a slot that are indicated as uplink by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: the UE receives PDSCH or CSI-RS in the set of symbols of the slot if the UE receives a corresponding indication by a DCI format.

- For a set of symbols of a slot that are indicated as downlink by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: the UE transmits PUSCH, PUCCH, PRACH, or SRS in the set of symbols of the slot if the UE receives a corresponding indication by a DCI format, a RAR UL grant, fallbackRAR UL grant, or successRAR.

- For a set of symbols of a slot that are indicated as uplink by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: the UE receives PDCCH as described in clause 10.1.

- For a set of symbols of a slot that are indicated as flexible by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: if the UE is configured by higher layers to receive PDSCH in the set of symbols of the slot, the UE receives the PDSCH in the set of symbols of the slot.

- For a set of symbols of a slot that are indicated as uplink by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: if the UE is configured by higher layers to receive PDSCH in the set of symbols of the slot, the UE receives the PDSCH in the set of symbols of the slot.

- For a set of symbols of a slot that are indicated as uplink by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: if the UE is configured by higher layers to receive DL PRS in the set of symbols of the slot, the UE receives the DL PRS.

- For a set of symbols of a slot that are indicated as flexible by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: if the UE is configured by higher layers to transmit SRS, or PUCCH, or PUSCH, or PRACH in the set of symbols of the slot and the UE is not provided enableConfiguredUL, then: the UE performs the transmission of SRS in the set of symbols.

- For a set of symbols of a slot that are indicated as uplnik by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: if the UE is configured by higher layers to transmit SRS, or PUCCH, or PUSCH, or PRACH in the set of symbols of the slot and the UE is not provided enableConfiguredUL, then: the UE performs the transmission of SRS in the set of symbols.

- For a set of symbols of a slot that are indicated as downlink by *tdd-UL-DL-ConfigurationCommon,* and *tdd-UL-DL-ConfigurationDedicated* if provided, or when *tdd-UL-DL-ConfigurationCommon,* and *tdd-UL-DL-ConfigurationDedicated* are not provided to the UE, and if the UE does not detect a DCI format 2_0 providing a slot format for the slot: if the UE is configured by higher layers to transmit SRS, or PUCCH, or PUSCH, or PRACH in the set of symbols of the slot and the UE is provided *enableConfiguredUL,* the UE can transmit the SRS, or PUCCH, or PUSCH, or PRACH, respectively.

A UE performs one or more actions/behaviors within a collision handling rule (or a first/old collision handling rule) listed above and performs one or more actions/behaviors within an exception/exemption of a collision handling rule (or a new/second collision handling rule) as listed above. A UE performs one or more actions/behaviors within a collision handling rule (or a first/old collision handling rule) on a symbol indicated as flexible or DL or UL. A UE performs one or more actions/behaviors within an exception/exemption of a collision handling rule (or a new/second collision handling rule) on a symbol indicated as the new transmission direction.

Collision handling rule(s) is associated with frequency resource(s). In one example, a first collision handling rule(s) is associated with a first frequency resource(s). A second collision handling rule(s) is associated with a second frequency resource(s). The UE performs corresponding action for reception/transmission within the first frequency resource(s) based on the first collision handling rule(s). The UE performs corresponding action for reception/transmission within the second frequency resource(s) based on the second collision handling rule(s). For example, a UE is indicated a first collision handling rule(s) for a first frequency resource(s) for a symbol and is indicated a second collision handling rule(s) for a second resource(s) for the symbol. The UE would perform a first collision handling rule(s) on the symbol or consider a scheduled UL transmission on the symbol an error case if/when frequency resource(s) of configured UL transmission or scheduled UL transmission is within the first frequency resource(s). The UE would perform a second collision handling rule(s) on the symbol if/when frequency resource(s) of configured UL transmission or scheduled UL transmission is within the second frequency resource(s). In another example, a first collision handling rule(s) direction is associated with a first frequency resource(s). The first collision handling rule(s) is not associated with a second frequency resource(s). The UE performs corresponding action for reception/transmission within the first frequency resource(s) based on the first collision handling rule(s). The UE does not perform corresponding action for reception/transmission within the second frequency resource(s) based on the first collision handling rule(s). For example, a UE is indicated a collision handling rule(s) applied for a first frequency resource(s) for a symbol. The UE is indicated a collision handling rule(s) is not applied for a second frequency resource(s) for the symbol. The UE would apply a collision handling rule(s) if/when frequency resource(s) of configured UL transmission or scheduled UL transmission is within the first frequency resource(s). The UE does not apply a collision handling rule(s) if/when frequency resource(s) of configured UL transmission or scheduled UL transmission is within the second frequency resource(s). The UE would perform a second collision handling rule(s) if/when frequency resource(s) of configured UL transmission or scheduled UL transmission is within the second frequency resource(s).

Association between collision handling rule(s) and frequency resource(s) could be fixed or predefined. Association between collision handling rule(s) and frequency resource(s) could be indicated from a base station to a UE. The association could be configured via RRC signaling and/or indicated via MAC CE. The association could be indicated via DCI. The DCI could be monitored periodically. The DCI indicates the association for a certain time period. The DCI updates the association when the association is changed. The association could be indicated together with SFI. The association could be indicated separately from SFI. For example, a first SFI-RNTI and/or a first location of SFI field could be associated with a first frequency resource(s). A second SFI-RNTI and/or a second location of SFI field could be associated with a second frequency resource(s). SFI indicated by DCI associated with the first SFI-RNTI and/or the first location of SFI field could be associated with the first frequency resource(s). SFI indicated by DCI associated with the second SFI-RNTI and/or the second location of SFI field could be associated with the second frequency resource(s). A bitmap associated with a SFI could be used to indicate frequency resource(s) associated with the SFI. A RIV value associated with a SFI could be used to indicate frequency resource(s) associated with the SFI. A bandwidth part associated with a SFI could be used to indicate frequency resource(s) associated with the SFI. A starting location(s) and a length(s) could be used to indicate the first frequency resource(s) and/or the second frequency resource(s). A starting PRB(s) and a bandwidth(s) could be used to indicate the first frequency resource(s) and/or the second frequency resource(s).

A UE determines a first collision handling rule under a first case. The UE determines a second collision handling rule under a second case. For example, a UE determines transmission direction (or SFI) of a symbol according to different transmission direction (or SFI) indicated for the symbol based on different cases and/or situations and/or factors. For example, a UE determines whether/how to handle reception/transmission on a symbol (according to transmission direction (or SFI) of a symbol) based on different cases and/or situations and/or factors. One example of the cases/factors could be an indication from a base station. A UE determines whether/how to handle reception/transmission on a symbol according to transmission direction (or SFI) of a symbol based on an indication from a base station. The indication could enable/disable (all or some of) collision handling rules. The indication could indicate which collision handling rule(s) applies. The UE determines which collision handling rule(s) applies based on the indication. The UE determines a first collision handling rule(s) applies or a second collision handling rule(s) applies based on the indication. The UE determines an old collision handling rule(s) applies or a new collision handling rule(s) applies based on the indication. The indication applies to all time/frequency resources (e.g., all following resource(s) upon indication). The indication applies to a subset of time resources (e.g., certain symbol(s) or slot(s)). The indication applies to a subset of time resources (e.g., certain PRB(s)/BWP(s)). The indication could be an indication to enable duplexing enhancement. Another example of the cases/factors could be a type of SFI (or signaling indicating the SFI, such as common RRC signal, dedicated RRC signal, DCI format2_0, scheduling DCI....). A UE determines whether/how to handle reception/transmission on a symbol (according to transmission direction (or SFI) of a symbol) based on a type of SFI. The UE determines which collision handling rule(s) applies based on type of SFI (e.g., SFI involved in the collision handling rules). The UE determines a first collision handling rule(s) applies or a second collision handling rule(s) applies based on the type of SFI (e.g., SFI involved in the collision handling rules). The UE determines an old collision handling rule(s) applies or a new collision handling rule(s) applies based the type of SFI (e.g., SFI involved in the collision handling rules). For example, a UE applies a first/old collision handling rule(s) for SFI indicated by common RRC signal. The UE applies a second/new collision handling rule(s) for SFI indicated by dedicated RRC signal. A UE applies a collision handling rule(s) for SFI indicated by common RRC signal. The UE does not apply collision handling rule(s) for SFI indicated by dedicated RRC signal. A UE applies a first collision handling rule(s) for SFI indicated by RRC signal. The UE applies a second collision handling rule(s) for SFI indicated by scheduling DCI or DCI format 2_0. A UE applies a collision handling rule(s) for SFI indicated by RRC signal. The UE does not apply collision handling rule(s) for SFI indicated by scheduling DCI or DCI format 2_0. An example could be: a UE considers symbols in a slot indicated as downlink by tdd-UL-DL-ConfigurationCommon to be available for receptions (and not available for transmission) and considers symbols in a slot indicated as uplink by tdd-UL-DL-ConfigurationCommon, or by tdd-UL-DL-ConfigurationDedicated to be available for transmissions (and not available for reception). A UE considers symbols in a slot indicated as downlink by tdd-UL-DL-ConfigurationDedicated to be available for transmissions and considers symbols in a slot indicated as uplink by tdd-UL-DL-ConfigurationDedicated to be available for reception. Another example could be: for a set of symbols of a slot that are indicated to a UE as downlink by *tdd-UL-DL-ConfigurationCommon,* the UE does not transmit PUSCH, PUCCH, PRACH, or SRS when the PUSCH, PUCCH, PRACH, or SRS overlaps, even partially, with the set of symbols of the slot. For a set of symbols of a slot that are indicated to a UE as downlink by *tdd-UL-DL-ConfigurationDedicated,* the UE transmits PUSCH, PUCCH, PRACH, or SRS when the PUSCH, PUCCH, PRACH, or SRS overlaps, even partially, with the set of symbols of the slot. Another example of the cases/factors could be a type of reception/transmission (e.g., a DL reception, a UL transmission, a configured DL reception, a DL reception scheduled by DCI, a configured UL transmission, a UL transmission scheduled by DCI). A UE determines whether/how to handle reception/transmission on a symbol (according to transmission direction (or SFI) of a symbol) based on a type of reception/transmission. The UE determines which collision handling rule(s) applies for a reception transmission based on a type of reception/transmission. The UE determines a first collision handling rule(s) applies or a second collision handling rule(s) applies based on a type of reception/transmission. The UE determines an old collision handling rule(s) applies or a new collision handling rule(s) applies based a type of reception/transmission. For example, a UE applies a first/old collision handling rule(s) for a (DL) reception. The UE applies a second/new collision handling rule(s) for UL transmission. A UE applies a collision handling rule(s) for a (DL) reception. The UE does not apply collision handling rule(s) for a (DL) reception. A UE applies a first/old collision handling rule(s) for a (UL) configured transmission. The UE applies a second/new collision handling rule(s) for (UL) transmission scheduled by DCI. A UE applies a collision handling rule(s) for a (UL) configured transmission. The UE does not apply collision handling rule(s) for (UL) transmission scheduled by DCI. One example could be: for a set of symbols of a slot that are indicated to a UE as uplink by tdd-UL-DL-ConfigurationCommon the UE does not receive PDCCH, PDSCH, or CSI-RS when the PDCCH, PDSCH, or CSI-RS overlaps, even partially, with the set of symbols of the slot. For a set of symbols of a slot that are indicated to a UE as downlink by tdd-UL-DL-ConfigurationCommon, the UE transmits PUSCH, PUCCH, PRACH, or SRS when the PUSCH, PUCCH, PRACH, or SRS overlaps, even partially, with the set of symbols of the slot. Another example: for a set of symbols of a slot that are indicated to a UE as downlink by tdd-UL-DL-ConfigurationCommon, the UE does not transmit PUSCH, PUCCH, PRACH, or SRS when the PUSCH, PUCCH, PRACH, or SRS overlaps, even partially, with the set of symbols of the slot wherein the PUSCH, PUCCH, PRACH, or SRS are configured to transmit. For a set of symbols of a slot that are indicated to a UE as downlink by tdd-UL-DL-ConfigurationCommon, the UE does not transmit PUSCH, PUCCH, PRACH, or SRS when the PUSCH, PUCCH, PRACH, or SRS overlaps, even partially, with the set of symbols of the slot wherein the PUSCH, PUCCH, PRACH, or SRS are scheduled by a DCI.

In another embodiment, a UE applies a first collision handling rule(s). The UE applies a second collision handling rule(s). The UE determines whether to apply the first collision handling rule(s) or to apply the second collision handling rule(s) based on an indication from a base station. The indication applies to all time/frequency resources (e.g., all following resource(s) upon indication). The indication applies to a subset of time resources (e.g., certain symbol(s) or slot(s)). The indication applies to a subset of time resources (e.g., certain PRB(s)/BWP(s)). The indication could be an indication to enable duplexing enhancement. The indication could be indicated by RRC signal. The indication could be indicated by MAC CE. The indication could be indicated by a DCI. The DCI could be DCI format 2_0. The DCI could be a scheduling DCI. The indication applies to the transmission/reception scheduled by the DCI. The indication applies to all the following transmission/reception. The indication applies to a period of time. The indication applies to a period of time associated with the DCI. The indication applies to a period of time associated with the DCI format 2_0. A UE applies a first collision handling rule(s) for a first type of SFI. The UE applies a second collision handling rule(s) for a second type of SFI. The UE determines whether to apply the first collision handling rule(s) or to apply the second collision handling rule(s) based on a type of SFI. The UE applies the first collision handling rule(s) for a (first) SFI if the (first) SFI is a first type of SFI. The UE applies the second collision handling rule(s) for a (second) SFI if the (second) SFI is a second type of SFI. A type of SFI could comprise one or more of the following: SFI indicted by RRC signal, SFI indicted by common RRC signal, SFI indicted by dedicated RRC signal, SFI indicted by DCI, SFI indicted by DCI format 2_0, SFI indicated by DCI scheduling a transmission/reception, SFI indicated by RRC configuring a transmission/reception. A UE applies a first collision handling rule(s) for a first type of transmission/reception. The UE applies a second collision handling rule(s) for a second type of transmission/reception. The UE determines whether to apply the first collision handling rule(s) or to apply the second collision handling rule(s) for a transmission/reception based on a type of transmission/reception. The UE determines whether to apply the first collision handling rule(s) or to apply the second collision handling rule(s) based on a type of transmission/reception. The UE applies the first collision handling rule(s) for a (first) transmission/reception if the (first) transmission/reception is a first type of transmission/reception. The UE applies the second collision handling rule(s) for a (second) transmission/reception if the (second) transmission/reception is a second type of transmission/reception. A type of transmission/reception could be one of the following: a DL reception, a UL transmission, a configured DL reception, a DL reception scheduled by DCI, a configured UL transmission, a UL transmission scheduled by DCI.

In another embodiment, a base station applies a first collision handling rule(s) for a UE. The base station applies a second collision handling rule(s) for the UE. The base station determines whether to apply the first collision handling rule(s) or to apply the second collision handling rule(s) based on an indication to the UE. The indication applies to all time/frequency resources (e.g., all following resource(s) upon indication). The indication applies to a subset of time resources (e.g., certain symbol(s) or slot(s)). The indication applies to a subset of time resources (e.g., certain PRB(s)/BWP(s)). The indication could be an indication to enable duplexing enhancement. The indication could be indicated by RRC signal. The indication could be indicated by MAC CE. The indication could be indicated by a DCI. The DCI could be DCI format 2_0. The DCI could be a scheduling DCI. The indication applies to the transmission/reception scheduled by the DCI. The indication applies to all the following transmission/reception. The indication applies to a period of time. The indication applies to a period of time associated with the DCI. The indication applies to a period of time associated with the DCI format 2_0. A base station applies a first collision handling rule(s) for a first type of SFI for the UE. The base station applies a second collision handling rule(s) for a second type of SFI for the UE. The base station determines whether to apply the first collision handling rule(s) or to apply the second collision handling rule(s) based on a type of SFI. The base station applies the first collision handling rule(s) for a (first) SFI if the (first) SFI is a first type of SFI. The base station applies the second collision handling rule(s) for a (second) SFI if the (second) SFI is a second type of SFI. A type of SFI could comprise one or more of the following: SFI indicted by RRC signal, SFI indicted by common RRC signal, SFI indicted by dedicated RRC signal, SFI indicted by DCI, SFI indicted by DCI format 2_0, SFI indicated by DCI scheduling a transmission/reception, SFI indicated by RRC configuring a transmission/reception. A base station applies a first collision handling rule(s) for a first type of transmission/reception for a UE. The base station applies a second collision handling rule(s) for a second type of transmission/reception for a UE. The base station determines whether to apply the first collision handling rule(s) or to apply the second collision handling rule(s) for a transmission/reception based on a type of transmission/reception. The base station determines whether to apply the first collision handling rule(s) or to apply the second collision handling rule(s) based on a type of transmission/reception. The base station applies the first collision handling rule(s) for a (first) transmission/reception if the transmission/reception is a first type of transmission/reception. The base station applies the second collision handling rule(s) for a (second) transmission/reception if the transmission/reception is a second type of transmission/reception. A type of transmission/reception could be one of the following: a UL reception, a DL transmission, a configured UL reception, a UL reception scheduled by DCI, a configured DL transmission, a DL transmission scheduled by DCI.

A new type of transmission direction is introduced. The new transmission direction is in addition to DL, UL, Flexible. The new transmission direction could be "N", "Neutral", "B", "Bi-direction", "Bypass", "X", "Special", "T", "Transparent", "Free", "Full duplex", "Flexible duplex". The new transmission direction could be indicated by all or some of signal(s) indicating SFI, e.g., one or more of RRC signal, common RRC signal, dedicated RRC signal, DCI, DCI format 2_0, DCI scheduling a transmission/reception, RRC signal configuring a transmission/reception. A UE handles a transmission/reception on a symbol indicated as the new transmission direction differently from handling transmission/reception on a symbol indicated as DL/UL/Flexible. A UE does not cancel a reception due to slot format for a symbol indicated as the new transmission direction. A UE does not cancel a reception due to overlapping with UL signal for a symbol indicated as the new transmission direction. For example, the UL signals are (configured) preamble. A UE does not cancel a transmission due to slot format for a symbol indicated as the new transmission direction. A UE does not cancel a transmission due to overlapping with a DL signal for a symbol indicated as the new transmission direction. For example, the DL signal could be SSB or RMSI or SIB1 or search space associated with CORESET 0. Both UL transmission and DL reception are allowed on a symbol indicated as the new transmission direction. UL transmission and DL reception are performed (simultaneously) on a symbol indicated as the new transmission direction. The new transmission direction could override a DL symbol. The new transmission direction could override a UL symbol. The new transmission direction could override a flexible symbol. The new transmission direction could not override a DL symbol. The new transmission direction could not override a UL symbol. The new transmission direction could not override a flexible symbol. A DL symbol could override the new transmission direction. A UL symbol could override the new transmission direction. A flexible symbol could override the new transmission direction. A flexible symbol could override the new transmission direction. A UL symbol could override the new transmission direction. A flexible symbol could override the new transmission direction.

A UE performs one or more of the first collision handling rule(s) and/or the second collision handling rule(s) for a symbol indicated as the new transmission direction (in the following noted as neutral symbol), for example:

- If the UE is additionally provided *tdd-UL-DL-ConfigurationDedicated,* the parameter *tdd-UL-DL-ConfigurationDedicated* overrides flexible and/or neutral symbols per slot over the number of slots as provided by *tdd-UL-DL-ConfigurationCommon.*
- For each slot having a corresponding index provided by *slotIndex,* the UE applies a format provided by corresponding *symbols.* The UE recives *tdd-UL-DL-ConfigurationDedicated* to indicate as neutral symbol that *tdd-UL-DL-ConfigurationCommon* indicates as a downlink or as an uplink symbol, respectively.
- A slot configuration period and a number of downlink symbols, uplink symbols, flexible symbols, and neutral symbols, in each slot of the slot configuration period are determined from *tdd-UL-DL-ConfigurationCommon* and *tdd-UL-DL-ConfigurationDedicated* and are common to each configured BWP.
- If a UE is not configured to monitor PDCCH for DCI format 2_0, for a set of symbols of a slot that are indicated as neutral by *tdd-UL-DL-ConfigurationCommon* and *tdd-UL-DL-ConfigurationDedicated* if provided, or when *tdd-UL-DL-ConfigurationCommon* and *tdd-UL-DL-ConfigurationDedicated* are not provided to the UE, the UE receives PDSCH or CSI-RS in the set of symbols of the slot if the UE receives a corresponding indication by a DCI format.

In one embodiment, a UE receives slot format information from a base station, wherein the slot format information corresponds to four transmission directions or four symbol types. A first transmission direction/symbol type is DL. A second transmission direction/symbol type is UL. A third transmission direction/symbol type is Flexible. A fourth transmission direction/symbol type is one of "N", "Neutral", "B", "Bi-direction", "Bypass", "X", "Special", "T", "Transparent", "Free", "Full duplex", "Flexible duplex". A UE is allowed to perform transmission and reception on symbols indicated as the fourth transmission direction/symbol type. A UE performs transmission and reception (simultaneously) on symbols indicated as fourth transmission direction/symbol type. A UE performs different handling on transmission/reception on symbol indicated as the fourth transmission direction/symbol type from handling on transmission/reception on symbol indicated as flexible. A UE performs different handling on transmission/reception on symbol indicated as the fourth transmission direction/symbol type from handling on transmission/reception on symbol indicated as DL. A UE performs different handling on transmission/reception on symbol indicated as the fourth transmission direction/symbol type from handling on transmission/reception on symbol indicated as UL. The fourth symbol type can override any of the three symbol types, e.g., DL, UL, Flexible. The fourth symbol type indicated by DCI format 2_0 can override any of the three symbol types, e.g., DL, UL, Flexible, configured by RRC signal. DL, UL, or Flexible cannot override the fourth symbol type. DL, UL, or Flexible indicated by DCI format 2_0 cannot override the fourth symbol type indicated by RRC.

In another embodiment, a base station transmits slot format information to a UE wherein the slot format information corresponds to four transmission directions or four symbol types. A first transmission direction/symbol type is DL. A second transmission direction/symbol type is UL. A third transmission direction/symbol type is Flexible. A fourth transmission direction/symbol type is one of "N", "Neutral", "B", "Bi-direction", "Bypass", "X", "Special", "T", "Transparent", "Free", "Full duplex", "Flexible duplex". A base station is allowed to perform transmission and reception on symbols indicated as the fourth transmission direction/symbol type. A base station performs transmission and reception (simultaneously) on symbols indicated as fourth transmission direction/symbol type. A base station performs different handling on transmission/reception on symbol indicated as the fourth transmission direction/symbol type from handling on transmission/reception on symbol indicated as flexible. A base station performs different handling on transmission/reception on symbol indicated as the fourth transmission direction/symbol type from handling on transmission/reception on symbol indicated as DL. A base station performs different handling on transmission/reception on symbol indicated as the fourth transmission direction/symbol type from handling on transmission/reception on symbol indicated as UL. The fourth symbol type can override any of the three symbol types, e.g., DL, UL, Flexible. The fourth symbol type indicated by DCI format 2_0 can override any of the three symbol types, e.g., DL, UL, Flexible, configured by RRC signal. DL, UL, or Flexible cannot override the fourth symbol type. DL, UL, or Flexible indicated by DCi format 2_0 cannot override the fourth symbol type indicated by RRC.

In various embodiments, in particular all described embodiments, SFI could be replaced with a transmission direction.

In various embodiments, in particular all described embodiments, a transmission direction could be replaced with SFI.

In various embodiments, in particular all described embodiments, the invention describes behavior or operation of a single serving cell unless otherwise noted.

In various embodiments, in particular all described embodiments, the invention describes behavior or operation of multiple serving cells unless otherwise noted.

In various embodiments, in particular all described embodiments, the invention describes behavior or operation of a single bandwidth part unless otherwise noted.

In various embodiments, in particular all described embodiments, a base station configures multiple bandwidth parts to the UE unless otherwise noted.

In various embodiments, in particular all described embodiments, a base station configures a single bandwidth part to the UE unless otherwise noted.

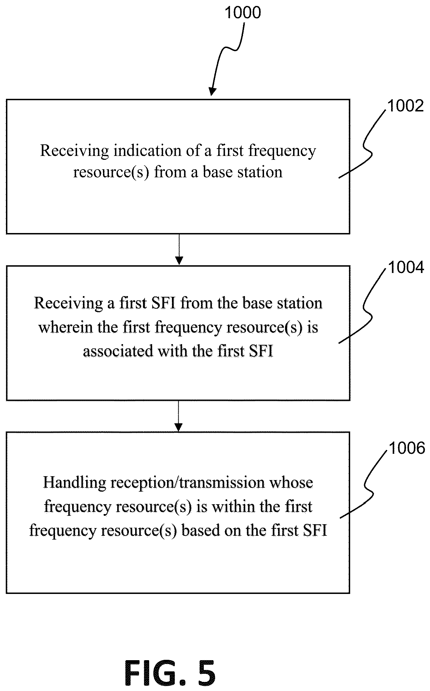

Referring to FIG. 5, with this and other concepts, systems, and methods of the present invention, a method 1000 for a UE in a wireless communication system comprises receiving indication of a first frequency resource(s) from a base station (step 1002), receiving a first SFI from the base station wherein the first frequency resource(s) is associated with the first SFI (step 1004), and handling reception/transmission whose frequency resource(s) is within the first frequency resource(s) based on the first SFI (step 1006).

Preferably, the first frequency resource(s) is a subset of frequency resource of a bandwidth part.

Preferably, the first frequency resource(s) is a subset of frequency resource of a serving cell.

Preferably, the UE does not handle reception/transmission whose frequency resource(s) is not within the first frequency resource(s) based on the first SFI.

Preferably, the UE handles reception/transmission whose frequency resource(s) is not within the first frequency resource(s) as if the first SFI is not indicated/present.

Preferably, the UE cancels a configured (DL) reception on a symbol if/when the first SFI indicates the symbol as UL and frequency resource of the configured reception is within the first frequency resource(s).

Preferably, the UE cancels a configured (UL) transmission on a symbol if/when the first SFI indicates the symbol as DL and frequency resource of the configured transmission is within the first frequency resource(s).

Preferably, the UE receives indication of a second frequency resource(s).

Preferably, the UE receives a second SFI and the second frequency resource is associated with the second SFI.

Preferably, the UE handles reception/transmission whose frequency resource(s) is within the second frequency resource(s) based on the second SFI.

Preferably, the UE cancels a configured (DL) reception on a symbol if/when the second SFI indicates the symbol as UL and frequency resource of the configured reception is within the second frequency resource(s).

Preferably, the UE cancels a configured (UL) transmission on a symbol if/when the second SFI indicates the symbol as DL and frequency resource of the configured transmission is within the second frequency resource(s).

Preferably, the second frequency resource(s) is a subset of frequency resource(s) of a bandwidth part.

Preferably, the second frequency resource(s) is a subset of frequency resource(s) of a serving cell.

Referring back to FIGS. 3 and 4, in one or more embodiments from the perspective of a UE, the device 300 includes a program code 312 stored in memory 310 of the transmitter. The CPU 308 could execute program code 312 to: (i) receive indication of a first frequency resource(s) from a base station, (ii) receive a first SFI from the base station wherein the first frequency resource(s) is associated with the first SFI, and (iii) handle reception/transmission whose frequency resource(s) is within the first frequency resource(s) based on the first SFI. Moreover, the CPU 308 can execute the program code 312 to perform all of the described actions, steps, and methods described above, below, or otherwise herein.

### Issues and Solutions:

Enhancement on duplexing schemes could have an impact on how a UE handles DL reception or UL transmission. For example, on a conventional DL symbol (e.g., without duplexing enhancement), a UE would not perform UL transmission on such a symbol, e.g., cancel a configured UL transmission on the symbol or does not expect a DCI scheduled UL transmission on the symbol (a NW shall not perform such scheduling and/or a UE considers such scheduling as an error case.) Similar restriction on DL reception could be applied for a conventional UL symbol. The indicated transmission direction applies to all/whole frequency resource(s) of a bandwidth part/serving cell. However, when one symbol could support more than one transmission direction, e.g., for both DL and UL, under duplexing enhancements such restrictions may not hold any longer. For example, a UE may be able to perform UL transmission on a symbol indicated as DL. In other words, the handling of collision may be different when duplexing enhancement is applied. Some adjustment of collision handling rules between DL and UL would require some more thought.

A concept of this invention is to determine whether/how to apply collision handling based on different cases and/or situations and/or factors. A UE determines a first collision handling rule under a first case. The UE determines a second collision handling rule under a second case. For example, a UE determines transmission direction (or SFI) of a symbol according to different transmission direction (or SFI) indicated for the symbol based on different cases and/or situations and/or factors. For example, a UE determines whether/how to handle reception/transmission on a symbol (according to transmission direction (or SFI) of a symbol) based on different cases and/or situations and/or factors. One example of the cases/factors could be an indication from a base station. A UE determines whether/how to handle reception/transmission on a symbol according to transmission direction (or SFI) of a symbol based on an indication from a base station. The indication could enable/disable (all or some of) collision handling rules. The indication could indicate which collision handling rule(s) applies. The UE determines which collision handling rule(s) applies based on the indication. The UE determines a first collision handling rule(s) applies or a second collision handling rule(s) applies based on the indication. The UE determines an old collision handling rule(s) applies or a new collision handling rule(s) applies based on the indication. The indication applies to all time/frequency resources (e.g., all following resource(s) upon indicated). The indication applies to a subset of time resources (e.g., certain symbol(s) or slot(s)). The indication applies to a subset of time resources (e.g., certain PRB(s)/BWP(s)). The indication could be an indication to enable duplexing enhancement. Another example of the cases/ factors could be a type of SFI (or signaling indicating the SFI, such as common RRC signal, dedicated RRC signal, DCI format2_0, scheduling DCI, etc.). A UE determines whether/how to handle reception/transmission on a symbol (according to transmission direction (or SFI) of a symbol) based on a type of SFI. The UE determines which collision handling rule(s) applies based on type of SFI (e.g., SFI involved in the collision handling rules). The UE determines a first collision handling rule(s) applies or a second collision handling rule(s) applies based on the type of SFI (e.g., SFI involved in the collision handling rules). The UE determines an old collision handling rule(s) applies or a new collision handling rule(s) applies based on type of SFI (e.g., SFI involved in the collision handling rules). For example, a UE applies a first/old collision handling rule(s) for SFI indicated by common RRC signal. The UE applies a second/new collision handling rule(s) for SFI indicated by dedicated RRC signal. A UE applies a collision handling rule(s) for SFI indicated by common RRC signal. The UE does not apply collision handling rule(s) for SFI indicated by dedicated RRC signal. A UE applies a first collision handling rule(s) for SFI indicated by RRC signal. The UE applies a second collision handling rule(s) for SFI indicated by scheduling DCI or DCI format 2_0. A UE applies a collision handling rule(s) for SFI indicated by RRC signal. The UE does not apply collision handling rule(s) for SFI indicated by scheduling DCI or DCI format 2_0. An example could be: A UE considers symbols in a slot indicated as downlink by tdd-UL-DL-ConfigurationCommon to be available for receptions (and not available for transmissions) and considers symbols in a slot indicated as uplink by tdd-UL-DL-ConfigurationCommon, or by tdd-UL-DL-ConfigurationDedicated to be available for transmissions (and not available for receptions). A UE considers symbols in a slot indicated as downlink by tdd-UL-DL-ConfigurationDedicated to be available for transmissions and considers symbols in a slot indicated as uplink by tdd-UL-DL-ConfigurationDedicated to be available for reception. Another example could be: for a set of symbols of a slot that are indicated to a UE as downlink by *tdd-UL-DL-ConfigurationCommon,* the UE does not transmit PUSCH, PUCCH, PRACH, or SRS when the PUSCH, PUCCH, PRACH, or SRS overlaps, even partially, with the set of symbols of the slot. For a set of symbols of a slot that are indicated to a UE as downlink by *tdd-UL-DL-ConfigurationDedicated,* the UE transmits PUSCH, PUCCH, PRACH, or SRS when the PUSCH, PUCCH, PRACH, or SRS overlaps, even partially, with the set of symbols of the slot. Another example of the cases/factors could be a type of reception/transmission (e.g., a DL reception, a UL transmission, a configured DL reception, a DL reception scheduled by DCI, a configured UL transmission, a UL transmission scheduled by DCI). A UE determines whether/how to handle reception/transmission on a symbol (according to transmission direction (or SFI) of a symbol) based on a type of reception/transmission. The UE determines which collision handling rule(s) applies for a reception transmission based on a type of reception/transmission. The UE determines a first collision handling rule(s) applies or a second collision handling rule(s) applies based on a type of reception/transmission. The UE determines an old collision handling rule(s) applies or a new collision handling rule(s) applies based a type of reception/transmission. For example, a UE applies a first/old collision handling rule(s) for a (DL) reception. The UE applies a second/new collision handling rule(s) for UL transmission. A UE applies a collision handling rule(s) for a (DL) reception. The UE does not apply collision handling rule(s) for a (DL) reception. A UE applies a first/old collision handling rule(s) for a (UL) configured transmission. The UE applies a second/new collision handling rule(s) for (UL) transmission scheduled by DCI. A UE applies a collision handling rule(s) for a (UL) configured transmission. The UE does not apply collision handling rule(s) for (UL) transmission scheduled by DCI. One example could be: for a set of symbols of a slot that are indicated to a UE as uplink by tdd-UL-DL-ConfigurationCommon the UE does not receive PDCCH, PDSCH, or CSI-RS when the PDCCH, PDSCH, or CSI-RS overlaps, even partially, with the set of symbols of the slot. For a set of symbols of a slot that are indicated to a UE as downlink by tdd-UL-DL-ConfigurationCommon, the UE transmits PUSCH, PUCCH, PRACH, or SRS when the PUSCH, PUCCH, PRACH, or SRS overlaps, even partially, with the set of symbols of the slot. In another example: for a set of symbols of a slot that are indicated to a UE as downlink by tdd-UL-DL-ConfigurationCommon, the UE does not transmit PUSCH, PUCCH, PRACH, or SRS when the PUSCH, PUCCH, PRACH, or SRS overlaps, even partially, with the set of symbols of the slot wherein the PUSCH, PUCCH, PRACH, or SRS are configured to transmit. For a set of symbols of a slot that are indicated to a UE as downlink by tdd-UL-DL-ConfigurationCommon, the UE does not transmit PUSCH, PUCCH, PRACH, or SRS when the PUSCH, PUCCH, PRACH, or SRS overlaps, even partially, with the set of symbols of the slot wherein the PUSCH, PUCCH, PRACH, or SRS are scheduled by a DCI.

All or some of the above and below cases/factors and aspects could be combined to form a new method, system, or embodiment.

Transmission direction(s) on a symbol(s) is associated with frequency resource(s). In one example, a first transmission direction is associated with a first frequency resource(s). A second transmission direction is associated with a second frequency resource(s). The UE performs corresponding action for reception/transmission within the first frequency resource(s) based on the first transmission direction. The UE performs corresponding action for reception/transmission within the second frequency resource(s) based on the second transmission direction. For example, a UE is indicated DL for a first frequency resource(s) for a symbol and is indicated UL for a second resource(s) for the symbol. The UE would cancel a configured UL transmission on the symbol or consider a scheduled UL transmission on the symbol an error case if/when frequency resource(s) of configured UL transmission or scheduled UL transmission is within the first frequency resource(s). The UE would perform a configured UL transmission or a scheduled UL transmission on the symbol if/when frequency resource(s) of configured UL transmission or scheduled UL transmission is within the second frequency resource(s). In another example, a first transmission direction is associated with a first frequency resource(s). The first transmission direction is not associated with a second frequency resource(s). The UE performs corresponding action for reception/transmission within the first frequency resource(s) based on the first transmission direction. The UE does not perform corresponding action for reception/transmission within the second frequency resource(s) based on the first transmission direction. For example, a UE is indicated DL for a first frequency resource(s) for a symbol. The UE is indicated DL is not applied for a second frequency resource(s) for the symbol. The UE would cancel a configured UL transmission on the symbol or consider a scheduled UL transmission on the symbol an error case if/when frequency resource(s) of configured UL transmission or scheduled UL transmission is within the first frequency resource(s). The UE behaves as if DL is not indicated for the symbol for a configured UL transmission or a scheduled UL transmission if/when frequency resource(s) of configured UL transmission or scheduled UL transmission is within the second frequency resource(s). The UE would perform a configured UL transmission or a scheduled UL transmission on the symbol if/when frequency resource(s) of configured UL transmission or scheduled UL transmission is within the second frequency resource(s).

The first frequency resource(s) and/or the second frequency resource(s) could be resources within a bandwidth part and/or a serving cell. The first frequency resource(s) and/or the second frequency resource(s) could be all/whole resources within a bandwidth part and/or a serving cell. The UE could be indicated both the first frequency resource(s) and the second frequency resource(s). The UE could be indicated one of the first frequency resource(s) and the second frequency resource(s) and derive the other. (e.g., the UE is indicated the first frequency resource(s) and frequency resource(s) of a serving cell/ bandwidth part which is not within the first frequency resource(s) is the second frequency resource(s)).

Association between collision handling rule(s) and frequency resource(s) could be fixed or predefined. Association between collision handling rule(s) and frequency resource(s) could be indicated from a base station to a UE. The association could be configured via RRC signaling and/or indicated via MAC CE. The association could be indicated via DCI. The DCI could be monitored periodically. The DCI indicate the association for a certain time period. The DCI updates the association when the association is changed. The association could be indicated together with SFI. The association could be indicated separately from SFI. For example, a first SFI-RNTI and/or a first location of SFI field could be associated with a first frequency resource(s). A second SFI-RNTI and/or a second location of SFI field could be associated with a second frequency resource(s). SFI indicated by DCI associated with the first SFI-RNTI and/or the first location of SFI field could be associated with the first frequency resource(s). SFI indicated by DCI associated with the second SFI-RNTI and/or the second location of SFI field could be associated with the second frequency resource(s). A bitmap associated with a SFI could be used to indicate frequency resource(s) associated with the SFI. A RIV (resource indicator value) value associated with a SFI could be used to indicate frequency resource(s) associated with the SFI. A bandwidth part associated with a SFI could be used to indicate frequency resource(s) associated with the SFI. A starting location(s) and a length(s) could be used to indicate the first frequency resource(s) and/or the second frequency resource(s). A starting PRB(s) and a bandwidth(s) could be used to indicate the first frequency resource(s) and/or the second frequency resource(s).

In one embodiment, a UE applies a first collision handling rule(s). The UE applies a second collision handling rule(s). The UE determines whether to apply the first collision handling rule(s) or to apply the second collision handling rule(s) based on an indication from a base station. The indication applies to all time/frequency resources (e.g., all following resource(s) upon indication). The indication applies to a subset of time resources (e.g., certain symbol(s) or slot(s)). The indication applies to a subset of time resources (e.g., certain PRB(s)/BWP(s)). The indication could be an indication to enable duplexing enhancement. The indication could be indicated by RRC signal. The indication could be indicated by MAC CE. The indication could be indicated by a DCI. The DCI could be DCI format 2_0. The DCI could be a scheduling DCI. The indication applies to the transmission/reception scheduled by the DCI. The indication applies to all the following transmissions/receptions. The indication applies to a period of time. The indication applies to a period of time associated with the DCI. The indication applies to a period of time associated with the DCI format 2_0. A UE applies a first collision handling rule(s) for a first type of SFI. The UE applies a second collision handling rule(s) for a second type of SFI. The UE determines whether to apply the first collision handling rule(s) or to apply the second collision handling rule(s) based on a type of SFI. The UE applies the first collision handling rule(s) for a (first) SFI if the (first) SFI is a first type of SFI. The UE applies the second collision handling rule(s) for a (second) SFI if the (second) SFI is a second type of SFI. A type of SFI could comprise one or more of the following: SFI indicted by RRC signal, SFI indicted by common RRC signal, SFI indicted by dedicated RRC signal, SFI indicted by DCI, SFI indicted by DCI format 2_0, SFI indicated by DCI scheduling a transmission/reception, SFI indicated by RRC configuring a transmission/reception. A UE applies a first collision handling rule(s) for a first type of transmission/reception. The UE applies a second collision handling rule(s) for a second type of transmission/reception. The UE determines whether to apply the first collision handling rule(s) or to apply the second collision handling rule(s) for a transmission/reception based on a type of transmission/reception. The UE determines whether to apply the first collision handling rule(s) or to apply the second collision handling rule(s) based on a type of transmission/reception. The UE applies the first collision handling rule(s) for a (first) transmission/reception if the (first) transmission/reception is a first type of transmission/reception. The UE applies the second collision handling rule(s) for a (second) transmission/reception if the (second) transmission/reception is a second type of transmission/reception. A type of transmission/reception could be one of the following: a DL reception, a UL transmission, a configured DL reception, a DL reception scheduled by DCI, a configured UL transmission, a UL transmission scheduled by DCI.

In another embodiment, a base station applies a first collision handling rule(s) for a UE. The base station applies a second collision handling rule(s) for the UE. The base station determines whether to apply the first collision handling rule(s) or to apply the second collision handling rule(s) based on an indication to the UE. The indication applies to all time/frequency resources (e.g., all following resource(s) upon indicated). The indication applies to a subset of time resources (e.g., certain symbol(s) or slot(s)). The indication applies to a subset of time resources (e.g., certain PRB(s)/BWP(s)). The indication could be an indication to enable duplexing enhancement. The indication could be indicated by RRC signal. The indication could be indicated by MAC CE. The indication could be indicated by a DCI. The DCI could be DCI format 2_0. The DCI could be a scheduling DCI. The indication applies to the transmission/reception scheduled by the DCI. The indication applies to all the following transmissions/receptions. The indication applies to a period of time. The indication applies to a period of time associated with the DCI. The indication applies to a period of time associated with the DCI format 2_0. A base station applies a first collision handling rule(s) for a first type of SFI for the UE. The base station applies a second collision handling rule(s) for a second type of SFI for the UE. The base station determines whether to apply the first collision handling rule(s) or to apply the second collision handling rule(s) based on a type of SFI. The base station applies the first collision handling rule(s) for a (first) SFI if the (first) SFI is a first type of SFI. The base station applies the second collision handling rule(s) for a (second) SFI if the (second) SFI is a second type of SFI. A type of SFI could comprise one or more of the following: SFI indicted by RRC signal, SFI indicted by common RRC signal, SFI indicted by dedicated RRC signal, SFI indicted by DCI, SFI indicted by DCI format 2_0, SFI indicated by DCI scheduling a transmission/reception, SFI indicated by RRC configuring a transmission/reception. A base station applies a first collision handling rule(s) for a first type of transmission/reception for a UE. The base station applies a second collision handling rule(s) for a second type of transmission/reception for a UE. The base station determines whether to apply the first collision handling rule(s) or to apply the second collision handling rule(s) for a transmission/reception based on a type of transmission/reception. The base station determines whether to apply the first collision handling rule(s) or to apply the second collision handling rule(s) based on a type of transmission/reception. The base station applies the first collision handling rule(s) for a (first) transmission/reception if the transmission/reception is a first type of transmission/reception. The base station applies the second collision handling rule(s) for a (second) transmission/reception if the transmission/reception is a second type of transmission/reception. A type of transmission/reception could be one of the following: a UL reception, a DL transmission, a configured UL reception, a UL reception scheduled by DCI, a configured DL transmission, a DL transmission scheduled by DCI.

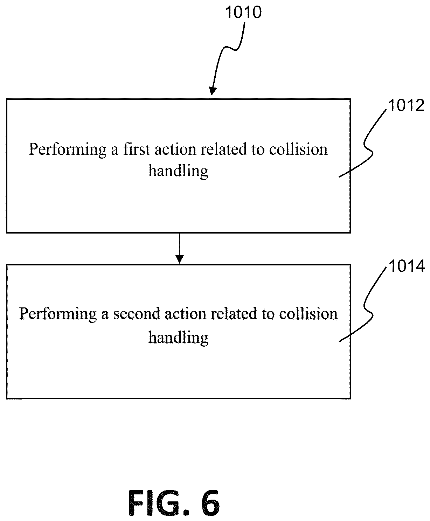

Referring to FIG. 6, with this and other concepts, systems, and methods of the present invention, a method 1010 for a UE in a wireless communication system comprises performing a first action related to collision handling (step 1012), and performing a second action related to collision handling (step 1014).

Preferably, the UE determines whether to perform the first action or the second action based on an indication from a base station.

Preferably, the indication applies to all time/frequency resources.

Preferably, the indication applies to a subset of time resources.

Preferably, the indication applies to a subset of frequency resources.

Preferably, the indication is an indication to enable duplexing enhancement.

Preferably, the indication is carried by a scheduling DCI.

Preferably, the indication is carried by a DCI for SFI.

Preferably, the UE applies a first collision handling rule(s) for a first type of SFI.

Preferably, the UE applies a second collision handling rule(s) for a second type of SFI.

Preferably, the UE determines whether to apply the first collision handling rule(s) or to apply the second collision handling rule(s) based on a type of SFI.

Preferably, the UE applies the first collision handling rule(s) for a first SFI if the first SFI is a first type of SFI.

Preferably, the UE applies the second collision handling rule(s) for a second SFI if the second SFI is a second type of SFI.

Preferably, the first type of SFI and/or the second type of SFI and/or a type of SFI is one or more of: SFI indicted by RRC signal, SFI indicted by common RRC signal, SFI indicted by dedicated RRC signal, SFI indicted by DCI, SFI indicted by DCI format 2_0, SFI indicated by DCI scheduling a transmission/reception, SFI indicated by RRC configuring a transmission/reception.

Preferably, the UE applies the first collision handling rule(s) for a first type of transmission/reception.

Preferably, the UE applies a second collision handling rule(s) for a second type of transmission/reception.

Preferably, the UE determines whether to apply the first collision handling rule(s) or to apply the second collision handling rule(s) for a transmission/reception based on a type of transmission/reception.

Preferably, the UE applies the first collision handling rule(s) for a first transmission/reception if the first transmission/reception is a first type of transmission/reception.

Preferably, the UE applies the second collision handling rule(s) for a second transmission/reception if the second transmission/reception is a second type of transmission/reception.

Preferably, the first type of transmission/reception and/or the second type of transmission/reception and/or the type of transmission/reception is one or more of the following: a DL reception, a UL transmission, a configured DL reception, a DL reception scheduled by DCI, a configured UL transmission, a UL transmission scheduled by DCI.

Referring back to FIGS. 3 and 4, in one or more embodiments from the perspective of a UE, the device 300 includes a program code 312 stored in memory 310 of the transmitter. The CPU 308 could execute program code 312 to: (i) perform a first action related to collision handling, and (ii) perform a second action related to collision handling. Moreover, the CPU 308 can execute the program code 312 to perform all of the described actions, steps, and methods described above, below, or otherwise herein.

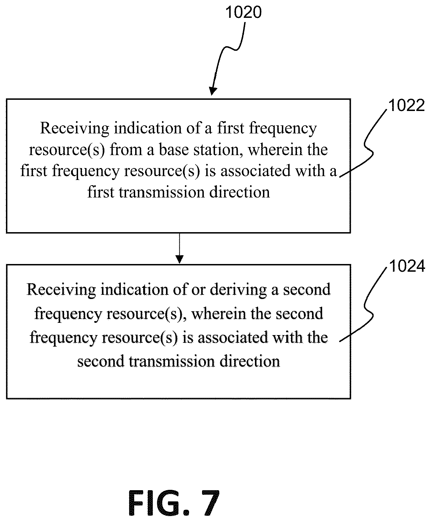

Referring to FIG. 7, with this and other concepts, systems, and methods of the present invention, a method 1020 for a UE in a wireless communication system comprises receiving indication of a first frequency resource(s) from a base station, wherein the first frequency resource(s) is associated with a first transmission direction (step 1022), and receiving indication of or deriving a second frequency resource(s) wherein the second frequency resource(s) is associated with the second transmission direction (step 1024).

Preferably, the UE derives the second frequency resource(s) based on the first frequency resource(s).

Preferably, the UE determines whether or not to perform a reception whose frequency resource(s) is within the first frequency resource(s) based on the first transmission direction, and/or the UE determines whether or not to perform a reception whose frequency resource(s) is within the second frequency resource(s) based on the second transmission direction.

Preferably, the UE determines whether or not to perform a transmission whose frequency resource(s) is within the first frequency resource(s) based on the first transmission direction, and/or the UE determines whether or not to perform a transmission whose frequency resource(s) is within the second frequency resource(s) based on the second transmission direction.

Preferably, the first frequency resource(s) and/or the second frequency resource(s) is a subset of frequency resource of a bandwidth part or a serving cell.

Preferably, the first frequency resource(s) and/or the second frequency resource(s) are on a same symbol.

Preferably, the first transmission direction is UL and the second transmission direction is DL.

Preferably, the first transmission direction is indicated via a first SFI and/or the second transmission direction is indicated via a second SFI.

Referring back to FIGS. 3 and 4, in one or more embodiments from the perspective of a UE, the device 300 includes a program code 312 stored in memory 310 of the transmitter. The CPU 308 could execute program code 312 to: (i) receive indication of a first frequency resource(s) from a base station wherein the first frequency resource(s) is associated with a first transmission direction, and (ii) receive indication of or derive a second frequency resource(s) wherein the second frequency resource(s) is associated with the second transmission direction. Moreover, the CPU 308 can execute the program code 312 to perform all of the described actions, steps, and methods described above, below, or otherwise herein.

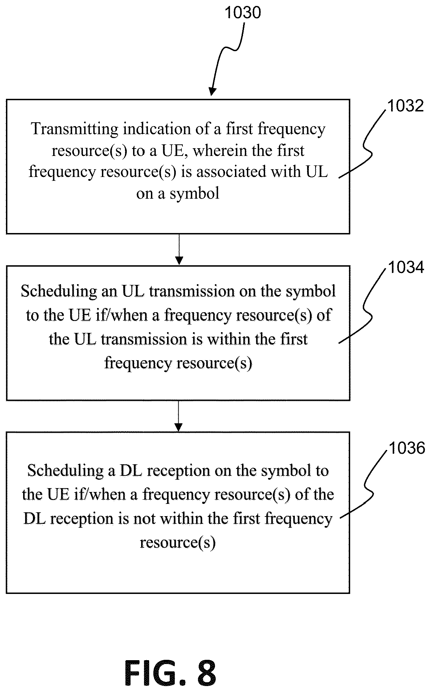

Referring to FIG. 8, with this and other concepts, systems, and methods of the present invention, a method 1030 for a base station in a wireless communication system comprises transmitting indication of a first frequency resource(s) to a UE, wherein the first frequency resource(s) is associated with UL on a symbol (step 1032), scheduling an UL transmission on the symbol to the UE if/when a frequency resource(s) of the UL transmission is within the first frequency resource(s) (step 1034), and scheduling a DL reception on the symbol to the UE if/when a frequency resource(s) of the DL reception is not within the first frequency resource(s) (step 1036).

Preferably, the base station is not allowed to schedule the UL transmission on the symbol to the UE if/when frequency resource(s) of the UL transmission is not within the first frequency resource(s).

Preferably, the base station is not allowed to schedule the DL reception on the symbol to a UE if/when frequency resource(s) of the DL reception is within the first frequency resource(s).

Preferably, the base station schedules the DL reception on the symbol if/when frequency resource(s) of the DL reception is within the first frequency resource(s).

Preferably, the base station schedules the UL transmission on the symbol if/when frequency resource(s) of the UL transmission is not within the first frequency resource(s).

Preferably, the UL transmission is a configured UL transmission and/or the DL reception is a configured DL reception.

Preferably, the first frequency resource(s) is a subset of frequency resource(s) of a bandwidth part or a serving cell.

Referring back to FIGS. 3 and 4, in one or more embodiments from the perspective of a base station, the device 300 includes a program code 312 stored in memory 310 of the transmitter. The CPU 308 could execute program code 312 to: (i) transmit indication of a first frequency resource(s) to a UE, wherein the first frequency resource(s) is associated with UL on a symbol, (ii) schedule an UL transmission on the symbol to the UE if/when a frequency resource(s) of the UL transmission is within the first frequency resource(s), and (iii) schedule a DL reception on the symbol to the UE if/when a frequency resource(s) of the DL reception is not within the first frequency resource(s). Moreover, the CPU 308 can execute the program code 312 to perform all of the described actions, steps, and methods described above, below, or otherwise herein.

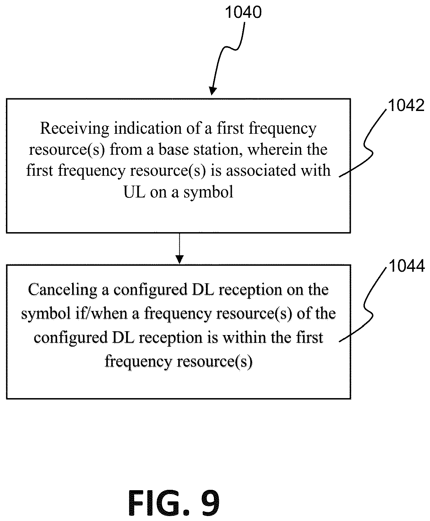

Referring to FIG. 9, with this and other concepts, systems, and methods of the present invention, a method 1040 for a UE in a wireless communication system comprises receiving indication of a first frequency resource(s) from a base station, wherein the first frequency resource(s) is associated with UL on a symbol (step 1042), and canceling a configured DL reception on the symbol if/when a frequency resource(s) of the configured DL reception is within the first frequency resource(s) (step 1044).

Preferably, the UE performs a DL reception scheduled by DCI on the symbol if/when a frequency resource(s) of the DL reception scheduled by DCI is within the first frequency resource(s).

Preferably, the UE does not expect to be scheduled a DL reception by DCI on the symbol if/when a frequency resource(s) of the DL reception scheduled by DCI is within the first frequency resource(s).

Preferably, the first frequency resource(s) is a subset of frequency resource(s) of a bandwidth part or a serving cell.

Referring back to FIGS. 3 and 4, in one or more embodiments from the perspective of a UE, the device 300 includes a program code 312 stored in memory 310 of the transmitter. The CPU 308 could execute program code 312 to: (i) receive indication of a first frequency resource(s) from a base station, wherein the first frequency resource(s) is associated with UL on a symbol, and (ii) cancel a configured DL reception on the symbol if/when a frequency resource(s) of the configured DL reception is within the first frequency resource(s). Moreover, the CPU 308 can execute the program code 312 to perform all of the described actions, steps, and methods described above, below, or otherwise herein.

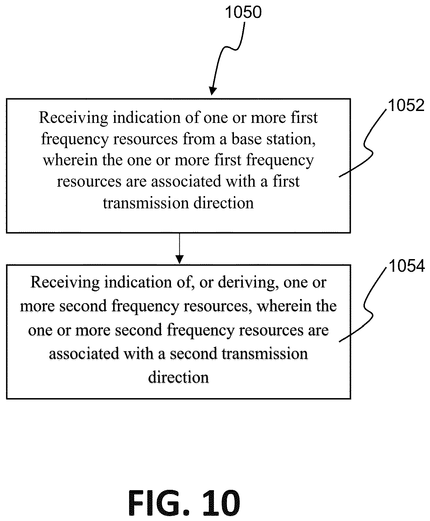

Referring to FIG. 10, with this and other concepts, systems, and methods of the present invention, a method 1050 for a UE in a wireless communication system comprises receiving indication of one or more first frequency resources from a base station, wherein the one or more first frequency resources are associated with a first transmission direction (step 1052), and receiving indication of, or deriving, one or more second frequency resources, wherein the one or more second frequency resources are associated with a second transmission direction (step 1054).

Preferably, the UE derives the one or more second frequency resources based on the one or more first frequency resources.

Preferably, the UE determines whether or not to perform a reception if one or more frequency resources are within the one or more first frequency resources based on the first transmission direction, and/or the UE determines whether or not to perform the reception if one or more frequency resources is within the one or more second frequency resources based on the second transmission direction.

Preferably, the UE determines whether or not to perform a transmission if one or more frequency resources are within the one or more first frequency resources based on the first transmission direction, and/or the UE determines whether or not to perform the transmission if one or more frequency resources are within the one or more second frequency resources based on the second transmission direction.

Preferably, the one or more first frequency resources and/or the one or more second frequency resources are a subset of one or more frequency resources of a bandwidth part or a serving cell.

Preferably, the one or more first frequency resources and/or the one or more second frequency resources are on a same symbol.

Preferably, the first transmission direction is UL and the second transmission direction is DL.

Preferably, the first transmission direction is indicated via a first SFI and/or the second transmission direction is indicated via a second SFI.

Referring back to FIGS. 3 and 4, in one or more embodiments from the perspective of a UE, the device 300 includes a program code 312 stored in memory 310 of the transmitter. The CPU 308 could execute program code 312 to: (i) receive indication of one or more first frequency resources from a base station, wherein the one or more first frequency resources are associated with a first transmission direction, and (ii) receive indication of, or derive, one or more second frequency resources, wherein the one or more second frequency resources are associated with a second transmission direction. Moreover, the CPU 308 can execute the program code 312 to perform all of the described actions, steps, and methods described above, below, or otherwise herein.

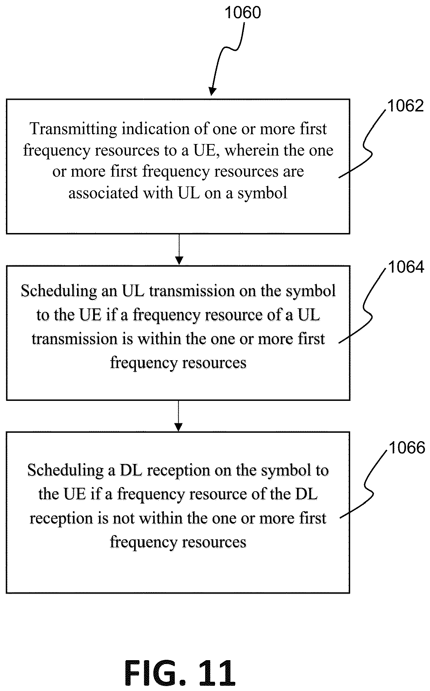

Referring to FIG. 11, with this and other concepts, systems, and methods of the present invention, a method 1060 for a base station in a wireless communication system comprises transmitting indication of one or more first frequency resources to a UE, wherein the one or more first frequency resources are associated with UL on a symbol (step 1062), scheduling an UL transmission on the symbol to the UE if a frequency resource of a UL transmission is within the one or more first frequency resources (step 1064), and scheduling a DL reception on the symbol to the UE if a frequency resource of the DL reception is not within the one or more first frequency resources (step 1066).

Preferably, the base station is not allowed to schedule the UL transmission on the symbol to the UE if the frequency resource of the UL transmission is not within the one or more first frequency resources.

Preferably, the base station is not allowed to schedule the DL reception on the symbol to a UE if the frequency resource of the DL reception is within the one or more first frequency resources.

Preferably, the base station schedules the DL reception on the symbol if the frequency resource of the DL reception is within the one or more first frequency resources.

Preferably, the base station schedules the UL transmission on the symbol if the frequency resource of the UL transmission is not within the first frequency resource.

Preferably, the UL transmission is a configured UL transmission and/or the DL reception is a configured DL reception.

Preferably, the one or more first frequency resources is a subset of a frequency resource of a bandwidth part or a serving cell.

Referring back to FIGS. 3 and 4, in one or more embodiments from the perspective of a base station, the device 300 includes a program code 312 stored in memory 310 of the transmitter. The CPU 308 could execute program code 312 to: (i) transmit indication of one or more first frequency resources to a UE, wherein the one or more first frequency resources are associated with UL on a symbol, (ii) schedule an UL transmission on the symbol to the UE if a frequency resource of a UL transmission is within the one or more first frequency resources, and (iii) schedule a DL reception on the symbol to the UE if a frequency resource of the DL reception is not within the one or more first frequency resources. Moreover, the CPU 308 can execute the program code 312 to perform all of the described actions, steps, and methods described above, below, or otherwise herein.

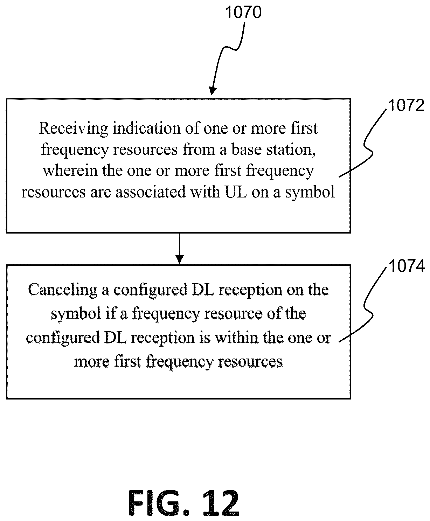

Referring to FIG. 12, with this and other concepts, systems, and methods of the present invention, a method 1070 for a UE in a wireless communication system comprises receiving indication of one or more first frequency resources from a base station, wherein the one or more first frequency resources are associated with UL on a symbol (step 1072), and canceling a configured DL reception on the symbol if a frequency resource of the configured DL reception is within the one or more first frequency resources (step 1074).

Preferably, the UE performs a DL reception scheduled by DCI on the symbol if a frequency resource of the DL reception scheduled by DCI is within the one or more first frequency resources.

Preferably, the UE does not expect to be scheduled with a DL reception by DCI on the symbol if a frequency resource of the DL reception scheduled by DCI is within the one or more first frequency resources.

Preferably, the one or more first frequency resources is a subset of a frequency resource of a bandwidth part or a serving cell.

Referring back to FIGS. 3 and 4, in one or more embodiments from the perspective of a UE, the device 300 includes a program code 312 stored in memory 310 of the transmitter. The CPU 308 could execute program code 312 to: (i) receive indication of one or more first frequency resources from a base station, wherein the one or more first frequency resources are associated with UL on a symbol, and (ii) cancel a configured DL reception on the symbol if a frequency resource of the configured DL reception is within the one or more first frequency resources. Moreover, the CPU 308 can execute the program code 312 to perform all of the described actions, steps, and methods described above, below, or otherwise herein.

Any combination of the above concepts or teachings can be jointly combined or formed to a new embodiment. The disclosed details and embodiments can be used to solve at least (but not limited to) the issues mentioned above and herein.

It is noted that any of the methods, alternatives, steps, examples, and embodiments proposed herein may be applied independently, individually, and/or with multiple methods, alternatives, steps, examples, and embodiments combined together.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects, concurrent channels may be established based on pulse repetition frequencies. In some aspects, concurrent channels may be established based on pulse position or offsets. In some aspects, concurrent channels may be established based on time hopping sequences. In some aspects, concurrent channels may be established based on pulse repetition frequencies, pulse positions or offsets, and time hopping sequences.

Those of ordinary skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of ordinary skill in the art would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects, any suitable computer-program product may comprise a computer-readable medium comprising codes relating to one or more of the aspects of the disclosure. In some aspects, a computer program product may comprise packaging materials.

While the invention has been described in connection with various aspects and examples, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

**Claims**

1. A method for a User Equipment, in the following also referred to as UE, comprising:

   receiving indication of one or more first frequency resources from a base station, wherein the one or more first frequency resources are associated with a first transmission direction (1022); and
   receiving indication of, or deriving, one or more second frequency resources, wherein the one or more second frequency resources are associated with a second transmission direction (1024).

2. The method of claim 1, wherein the UE derives the one or more second frequency resources based on the one or more first frequency resources.

3. The method of claim 1 or 2, further comprising determining whether or not to perform a reception if one or more frequency resources are within the one or more first frequency resources based on the first transmission direction, and/or determining whether or not to perform the reception if one or more frequency resources is within the one or more second frequency resources based on the second transmission direction.

4. The method of any one of claims 1 to 3, further comprising determining whether or not to perform a transmission if one or more frequency resources are within the one or more first frequency resources based on the first transmission direction, and/or determining whether or not to perform the transmission if one or more frequency resources are within the one or more second frequency resources based on the second transmission direction.

5. The method of any one of claims 1 to 4, wherein the one or more first frequency resources and/or the one or more second frequency resources are a subset of one or more frequency resources of a bandwidth part or a serving cell; and/or

wherein the one or more first frequency resources and/or the one or more second frequency resources are on a same symbol.

6. The method of any one of claims 1 to 5, wherein the first transmission direction is Uplink, in the following also referred to as UL, and the second transmission direction is Downlink, in the following also referred to as DL; and/or wherein the first transmission direction is indicated via a first Slot Form Indicator, in the following also referred to as SFI, and/or the second transmission direction is indicated via a second SFI.

7. A method for a base station, comprising:

    transmitting indication of one or more first frequency resources to a User Equipment, in the following also referred to as UE, wherein the one or more first frequency resources are associated with Uplink, in the following also referred to as UL, on a symbol (1032);
    scheduling an UL transmission on the symbol to the UE if a frequency resource of a UL transmission is within the one or more first frequency resources (1034); and
    scheduling a Downlink, in the following also referred to as DL, reception on the symbol to the UE if a frequency resource of the DL reception is not within the one or more first frequency resources (1036).

8. The method of claim 7, wherein the base station is not allowed to schedule the UL transmission on the symbol to the UE if the frequency resource of the UL transmission is not within the one or more first frequency resources; and/or wherein the base station is not allowed to schedule the DL reception on the symbol to a UE if the frequency resource of the DL reception is within the one or more first frequency resources.

9. The method of claim 7 or 8, further comprising scheduling the DL reception on the symbol if the frequency resource of the DL reception is within the one or more first frequency resources; and/or further comprising scheduling the UL transmission on the symbol if the frequency resource of the UL transmission is not within the first frequency resource.

10. The method of any one of claims 7 to 9, wherein the UL transmission is a configured UL transmission and/or the DL reception is a configured DL reception.

11. A method for a User Equipment, in the following also referred to as UE, comprising:

    receiving indication of one or more first frequency resources from a base station, wherein the one or more first frequency resources are associated with Uplink, in the following also referred to as UL, on a symbol (1042); and
    canceling a configured Downlink, in the following also referred to as DL, reception on the symbol if a frequency resource of the configured DL reception is within the one or more first frequency resources (1044).

12. The method of claim 11, further comprising performing a DL reception scheduled by Downlink Control Information, in the following also referred to as DCI, on the symbol if a frequency resource of the DL reception scheduled by DCI is within the one or more first frequency resources.

13. The method of claim 11 or 12, wherein the UE does not expect to be scheduled with a DL reception by DCI on the symbol if a frequency resource of the DL reception scheduled by DCI is within the one or more first frequency resources.

14. The method of any one of claims 11 to 13, wherein DCI is periodically monitored.

15. The method of any one of claims 7 to 14, wherein the one or more first frequency resources is a subset of a frequency resource of a bandwidth part or a serving cell.

**FIG. 1**

**FIG. 2**

FIG. 3

PROGRAM CODE *312*

APPLICATION LAYER *400*

LAYER 3 *402*

LAYER 2 *404*

LAYER 1 *406*

# FIG. 4

1000

Receiving indication of a first frequency resource(s) from a base station — 1002

Receiving a first SFI from the base station wherein the first frequency resource(s) is associated with the first SFI — 1004

Handling reception/transmission whose frequency resource(s) is within the first frequency resource(s) based on the first SFI — 1006

## FIG. 5

1010

Performing a first action related to collision handling

1012

Performing a second action related to collision handling

1014

# FIG. 6

1020

Receiving indication of a first frequency
resource(s) from a base station, wherein the
first frequency resource(s) is associated with a
first transmission direction

1022

Receiving indication of or deriving a second
frequency resource(s), wherein the second
frequency resource(s) is associated with the
second transmission direction

1024

# FIG. 7

1030

Transmitting indication of a first frequency
resource(s) to a UE, wherein the first
frequency resource(s) is associated with UL
on a symbol

1032

Scheduling an UL transmission on the symbol
to the UE if/when a frequency resource(s) of
the UL transmission is within the first
frequency resource(s)

1034

Scheduling a DL reception on the symbol to
the UE if/when a frequency resource(s) of the
DL reception is not within the first frequency
resource(s)

1036

# FIG. 8

1040

Receiving indication of a first frequency
resource(s) from a base station, wherein the
first frequency resource(s) is associated with
UL on a symbol

1042

Canceling a configured DL reception on the
symbol if/when a frequency resource(s) of the
configured DL reception is within the first
frequency resource(s)

1044

# FIG. 9

1050

Receiving indication of one or more first frequency resources from a base station, wherein the one or more first frequency resources are associated with a first transmission direction
1052

Receiving indication of, or deriving, one or more second frequency resources, wherein the one or more second frequency resources are associated with a second transmission direction
1054

# FIG. 10

1060

Transmitting indication of one or more first frequency resources to a UE, wherein the one or more first frequency resources are associated with UL on a symbol

1062

Scheduling an UL transmission on the symbol to the UE if a frequency resource of a UL transmission is within the one or more first frequency resources

1064

Scheduling a DL reception on the symbol to the UE if a frequency resource of the DL reception is not within the one or more first frequency resources

1066

# FIG. 11

1070

1072

Receiving indication of one or more first
frequency resources from a base station,
wherein the one or more first frequency
resources are associated with UL on a symbol

1074

Canceling a configured DL reception on the
symbol if a frequency resource of the
configured DL reception is within the one or
more first frequency resources

# FIG. 12

Europäisches
Patentamt
European
Patent Office
Office européen
des brevets

# EUROPEAN SEARCH REPORT

Application Number

EP 22 20 5965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/165326 A1 (SONY GROUP CORP [JP]; SONY EUROPE BV [GB]) 26 August 2021 (2021-08-26) | 1,3-6, 11,12, 14,15 | INV. H04W72/0453 H04L5/00 |
| A | * page 9, line 39 - page 10, line 28; figure 7 * * page 11, line 21 - page 15, line 1; figures 8, 9 * | 2,7-10, 13 | H04L5/14 |
| X | US 2021/307010 A1 (ABOTABL AHMED ATTIA [US] ET AL) 30 September 2021 (2021-09-30) | 1-6 | |
| A | * paragraphs [0009], [0065] - [0068], [0078], [0103], [0113] - [0118], [0121], [0124]; figure 1 * * paragraphs [0131] - [0136], [0146] - [0148], [0151], [0154]; figure 8 * | 7-15 | |
| X | US 2021/258133 A1 (RAGHAVAN VASANTHAN [US] ET AL) 19 August 2021 (2021-08-19) | 1,3-6 | |
| A | * paragraphs [0010], [0054], [0073], [0088], [0089], [0114] - [0121]; figures 8,12 * | 2,7-15 | |
| X | ASUSTEK: "Discussion on aspects related to duplex operation", 3GPP DRAFT; R1-2103666, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210412 - 20210420 6 April 2021 (2021-04-06), XP051993466, Retrieved from the Internet: URL:https://ftp.3gpp.org/tsg_ran/WG1_RL1/T SGR1_104b-e/Docs/R1-2103666.zip [retrieved on 2021-04-06] | 7-11, 13-15 | TECHNICAL FIELDS SEARCHED (IPC) H04W H04L |
| A | * page 2 - page 3 * | 1-6,12 | |

-/--

The present search report has been drawn up for all claims

| Place of search | Date of completion of the search | Examiner |
|---|---|---|
| The Hague | 13 March 2023 | Romaszko, Sylwia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 20 5965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMSUNG: "HD-FDD Operation for RedCap UEs", 3GPP DRAFT; R1-2103248, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210412 - 20210420 7 April 2021 (2021-04-07), XP052178025, Retrieved from the Internet: URL:https://ftp.3gpp.org/tsg_ran/WG1_RL1/T SGR1_104b-e/Docs/R1-2103248.zip [retrieved on 2021-04-07] | 7-11, 13-15 | |
| A | * page 2 - page 4 * | 1-6,12 | |
| X | INTEL CORPORATION: "On other aspects of complexity reduction for RedCap UEs", 3GPP DRAFT; R1-2111502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20211111 - 20211119 6 November 2021 (2021-11-06), XP052074917, Retrieved from the Internet: URL:https://ftp.3gpp.org/tsg_ran/WG1_RL1/T SGR1_107-e/Docs/R1-2111502.zip [retrieved on 2021-11-06] | 1,3-15 | TECHNICAL FIELDS SEARCHED (IPC) |
| A | * page 1; table 1 * * Section 3 * | 2 | |

-/--

The present search report has been drawn up for all claims

| Place of search | Date of completion of the search | Examiner |
|---|---|---|
| The Hague | 13 March 2023 | Romaszko, Sylwia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 20 5965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LENOVO ET AL: "Half duplex operation for RedCap", 3GPP DRAFT; R1-2103536, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210412 - 20210420 7 April 2021 (2021-04-07), XP052178255, Retrieved from the Internet: URL:https://ftp.3gpp.org/tsg_ran/WG1_RL1/TSGR1_104b-e/Docs/R1-2103536.zip [retrieved on 2021-04-07] | 7-11, 13-15 | |
| A | * Section 2 * | 1-6,12 | |

TECHNICAL FIELDS
SEARCHED (IPC)

The present search report has been drawn up for all claims

| Place of search | Date of completion of the search | Examiner |
|---|---|---|
| The Hague | 13 March 2023 | Romaszko, Sylwia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 5965

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2023

| Patent document cited in search report | | Publication date | Patent family member(s) | | Publication date |
|---|---|---|---|---|---|
| WO 2021165326 | A1 | 26-08-2021 | EP | 4107892 A1 | 28-12-2022 |
| | | | WO | 2021165326 A1 | 26-08-2021 |
| US 2021307010 | A1 | 30-09-2021 | CN | 115349240 A | 15-11-2022 |
| | | | EP | 4128634 A1 | 08-02-2023 |
| | | | US | 2021307010 A1 | 30-09-2021 |
| | | | WO | 2021202185 A1 | 07-10-2021 |
| US 2021258133 | A1 | 19-08-2021 | CN | 115066961 A | 16-09-2022 |
| | | | EP | 4108029 A1 | 28-12-2022 |
| | | | US | 2021258133 A1 | 19-08-2021 |
| | | | WO | 2021167708 A1 | 26-08-2021 |

EPO FORM P0459

For more details about this annex : see Official Journal of the European Patent Office, No. 12/82

**EP 4 181 607 A1**

**Non-patent literature cited in the description**

- NR physical channels and modulation. *3GPP TS 38.211 V15.7.0*
- NR Physical layer procedures for control. *3GPP TS 38.213 V16.6.0*
- Draft SID on Evolution of NR Duplex Operation. *RP-212707*